# EUROPÄISCHE PATENTSCHRIFT

(11) **EP 3 898 361 B1**
(45) Veröffentlichungstag und Bekanntmachung des Hinweises auf die Patenterteilung: **20.03.2024**
(21) Anmeldenummer: 19829503.2
(22) Anmeldetag: 17.12.2019
(51) Int. Cl.: B60T 13/66, B60T 13/74, B60T 17/22

(54) **ELEKTROMECHANISCHE BREMSENANLAGE**
ELECTROMECHANICAL BRAKE SYSTEM
SYSTÈME DE FREINAGE ÉLECTROMÉCANIQUE

(30) Priorität: 17.12.2018 AT 511232018
(43) Veröffentlichungstag der Anmeldung: 27.10.2021
(73) Patentinhaber: GreenBrakes GmbH, 8230 Hartberg (AT)
(72) Erfinder: PUTZ, Michael, 8272 Sebersdorf (AT)
(74) Vertreter: Gibler & Poth Patentanwälte KG
(86) Internationale Anmeldenummer: PCT/EP2019/085730
(87) Internationale Veröffentlichungsnummer: WO 2020/127326

(56) Entgegenhaltungen:
- EP-A1- 0 626 297
- WO-A2-2014/170259
- DE-A1- 19 742 920
- US-A1- 2013 151 101

## Beschreibung

Die Erfindung betrifft eine elektromechanische Bremsenanlage gemäß dem Oberbegriff des Patentanspruches 1.

Die Betätigung einer Fahrzeugbremse mittels Elektromotor, anstelle einer Hydraulik oder Pneumatik, ist an sich bekannt. Allerdings hat sich gezeigt, dass die Betätigung einer Bremse, bei welcher mit einem bestimmten Bremsmoment bzw. einer anderweitig vorgegebenen Bremswirkung auch tatsächlich gebremst werden soll, in der Praxis mit zahlreichen Problemen verbunden ist, weshalb es bisher nur mit hohem Aufwand möglich war, eine elektromechanische Bremsenanlage sicher und vorgebbar zu betreiben.

Aus der DE 197 42 920 A1 ist eine elektromechanische Bremsanlage und ein Verfahren zum Betreiben einer elektromechanischen Bremsanlage umfassend eine elektromechanische Bremse bekannt.

Weiters sind aus der US 2013/151101 A1 eine hydraulische Steuereinheit eines elektronisch gesteuerten hydraulischen Bremssystems, aus der WO 2014/170259 A2 ein Verfahren zum Betätigen einer elektrisch betätigten Reibungsbremse und aus der EP 0 626 297 A1 ein Verfahren zur Einstellung eines Bremswertes auf einen Soll-Bremswert und eine Bremsanlage zum Durchführen des Verfahrens bekannt.

Das Bremsmoment ist - bei bekannten Reibbeiwerten und Abmessungen des beteiligten Bremsbelages und der Bremsscheibe - direkt proportional der Anpresskraft des wenigstens einen Bremsbelages auf die Bremsscheibe. Allerdings sind in der Praxis weder die Reibbeiwerte noch die Anpresskraft bekannt.

An sich könnte die Anpresskraft mittels eines sog. Normalkraftsensors bzw. eines anderen Kraftsensors direkt ermittelt werden, und in eine entsprechende Steuerung einfließen. Da es sich bei einer Bremse eines Straßenfahrzeuges jedoch um eine sicherheitsrelevante Anlage handelt, werden an einen entsprechenden Kraftsensor erhebliche technische Anforderungen hinsichtlich der Messgenauigkeit als auch der Ausfallssicherheit gestellt. Dies würde in der Praxis dazu führen, dass eine entsprechende Bremsanlage mit einem ausreichend messgenauen und zudem mehrfach redundanten Kraftmesssystem technisch sehr aufwendig und kostenintensiv wäre. Zudem wäre eine solche Anlage trotz aller Bemühungen diese sicher zu machen, weiterhin sicherheitstechnisch problematisch, da die gesamte Funktion der Bremsanlage vom sicheren Funktionieren des Kraftmesssystems abhängt. Ein Ausfall dieses Systems oder auch nur eine entsprechend weitreichende Abweichung der Messgenauigkeit hätten gravierende Folgen für Leib und Leben der Fahrzeuginsassen sowie möglicherweise weiterer unbeteiligter Verkehrsteilnehmer.

Das Bremsmoment kann, ohne Verwendung eines Kraftmesssystems bereits über die Stromaufnahme des Elektromotors, welcher als Antrieb für die Mechanik der Bremsanlage dient, welche den wenigstens einen Bremsbelag gegen die Bremsscheibe drückt, abgeschätzt werden. Allerdings hat sich gezeigt, dass dies in der Praxis zu ungenau ist, um die Betätigung einer Bremse lediglich über deren Stromaufnahme zu steuern bzw. zu regeln. Der betreffende Elektromotor wirkt nicht direkt bzw. unmittelbar auf den Bremsbelag, sondern treibt ein mechanisches System an, dessen Eigenschaften ständigen Änderungen unterworfen sind. Es liegt in der Natur eines Fahrzeuges, dass dieses innerhalb kurzer Zeit von einem Ort an einen anderen Ort gelangt. Dabei ändern sich sowohl die Umgebungsbedingungen, wie auch die Bedingungen an dem Fahrzeug selbst, etwa durch Veränderungen der Temperatur, der Feuchtigkeit, des Umfanges und der detaillierten Zusammensetzung der Schmierstoffe in der Bremsanlage, sowie durch Verschmutzung. Aufgrund dieser ständigen Änderungen ist eine Regelung, welche ausschließlich auf Basis der Stromaufnahme des Elektromotors basiert, in der Praxis nicht möglich.

Aufgabe der Erfindung ist es daher eine elektromechanische Bremsenanlage der eingangs genannten Art anzugeben, mit welcher die genannten Nachteile vermieden werden können, und bei welcher eine möglichst genaue Einstellung einer vorgebbaren Bremswirkung mit geringem Aufwand an erforderlichen Sensoren möglich ist.

Erfindungsgemäß wird dies durch die Merkmale des Patentanspruches 1 erreicht.

Dadurch kann eine vorgegebene Bremswirkung mit geringem Aufwand an erforderlichen Sensoren sehr genau eingestellt werden.

Dadurch kann eine Kalibrierung der Steuergrößen bzw. der Zusammenhänge innerhalb der Bremsenanlage durchgeführt werden. Insbesondere kann dadurch der Zusammenhang zwischen Strom und Motormoment kalibriert werden. Dadurch kann schnell, und ohne Durchführung eines Bremsvorganges, eine bereits relativ genaue Abschätzung der Verluste bzw. Toleranzen erfolgen. Dadurch kann schnell der Korrekturfaktor in der richtigen Größenordnung eingestellt werden. Dadurch wird die gesamte Messgenauigkeit erhöht. Dadurch ist es auch möglich sehr genau den Berührpunkt des Bremsbelags an der Reibfläche zu bestimmen, weil ab dann die kleine Kraft, die im Luftspalt nur durch die Feder verursacht wird, anzusteigen beginnt.

Dadurch werden ständig die jeweils vorherrschenden mechanischen Eigenschaften der Bremsenanlage, und deren Zusammenhang mit wenigstens einem, bei der Ansteuerung der Bremse Verwendung findenden Betriebsparameter ermittelt, welche Eigenschaften bei der Betätigung der Bremse berücksichtigt werden. Dadurch können Veränderungen der Bremsenanlage, welche etwa zwischen einer Außerbetriebnahme der Bremsenanlage und deren erneuter Inbetriebnahme und/oder im laufenden Betrieb erfolgt ist, sicher erkannt und berücksichtigt werden. Dadurch ist es möglich, ausgehend von einer Vorgabe einer Bremswirkung, die Bremse derart anzusteuern, dass diese Bremswirkung auch tatsächlich erreicht wird, und zwar ohne dass hierfür ein aufwendiges und fehleranfälliges Kraftmesssystem, insbesondere ein Normalkraftmesssystem, erforderlich wäre. Die gegenständliche elektromechanische Bremsenanlage weist einen einfachen Aufbau auf, und ist sehr betriebssicher, da die ausgewerteten Betriebsparameter ohnedies für die Bewegung bzw. den Betrieb der Bremse erforderlich sind.

Dadurch kann die Bremsanlage unter Berücksichtigung von Reibung, Steifigkeit, Trägheit und Verschmutzung der beteiligten beweglichen Teile in jede Bewegungsrichtung sicher und genau angesteuert bzw. betrieben werden. Dadurch ist eine genaue Positionssteuerung und/oder Kraft- bzw. Momentsteuerung des wenigstens einen Bremsbelags möglich.

Durch die Merkmale des abhängigen Patentanspruches 2 können die nachfolgend genannten weiteren Vorteile erzielt werden:
Es hat sich gezeigt, dass eine Bremse bzw. eine Bremsenanlage bei der Bewegung des wenigstens einen Bremsbelags in Richtung zur Reibfläche ein, oftmals auch nur geringfügig, anderes Verhalten aufweist, als bei Bewegung des wenigstens einen Bremsbelags in die entgegengesetzte Richtung, also weg von der Reibfläche. Dieses unterschiedliche Verhalten kann mehrere Ursachen haben, welche unterschiedlich stark wirken. Beispielsweise wird beim Bremsen, der wenigstens eine Bremsbelag entgegen dem Drehmoment des Elektromotors gegen die Reibfläche gedrückt. Dabei kommt es - aufgrund der endlichen Steifigkeit realer Bauteile - zu, meist reversiblen, Verformungen. Es ist daher erforderlich, dass der Elektromotor auch diese Verformungen sowie die entsprechenden Verluste überwindet, um tatsächlich eine bestimmte Anpresskraft des Bremsbelags an der Reibfläche zu erzielen. Beim Lösen der Bremse, daher, bei Abheben bzw. Entfernen des Bremsbelages von der Reibfläche, wirkt jedoch die, in den elastischen Verformungen der Betätigungsmechanik gespeicherte Energie in derselben Richtung, wie die - umgelenkte - Bewegung des Elektromotors. Das Drehmoment am Motor ist daher beim Lösen der Bremse entsprechend geringer als beim Betätigen der Bremse, da die in reversiblen Verformungen gespeicherte Energie nunmehr das Lösen der Bremse unterstützt. Allerdings wirken Verluste, insbesondere Reibungsverluste, dem Lösen der Bremse entgegen. Dieses unterschiedliche Verhalten hat sich in der Praxis als relevant für das genaue Ansteuern der Bremse erwiesen.

Weitere relevante Ursachen für dieses unterschiedliche Verhalten sind etwa Reibungsverluste, welche ebenfalls je Bewegungsrichtung unterschiedlich ausfallen können.

Indem bei der gegenständlichen Bremsanlage sowohl das Verhalten bei einer Bewegung der Bremse in Richtung eines Bremsvorganges als auch in Richtung eines Lösens der Bremse ermittelt bzw. gemessen wird, werden die dabei ermittelten unterschiedlichen Eigenschaften bzw. Unterschiede beim Ansteuern der Bremsanlage berücksichtigt. Dabei wird das "momentane" Betriebsverhalten mit einer gespeicherten Erwartung verglichen, wodurch eine Verbesserung der Genauigkeit erzielt werden kann. Dabei kann diese Anpassung bzw. ein entsprechendes Nachführen während des gesamten Betriebes der Bremsenanlage erfolgen.

Die Erfindung betrifft weiters ein Verfahren zum Betreiben einer elektromechanischen Bremsanlage gemäß dem Oberbegriff des Patentanspruches 15.

Aufgabe der Erfindung ist es daher ein Verfahren der vorstehend genannten Art anzugeben, mit welchem die genannten Nachteile vermieden werden können, und bei welchem eine möglichst genaue Einstellung einer vorgebbaren Bremswirkung mit geringem Aufwand an erforderlichen Sensoren möglich ist.

Erfindungsgemäß wird dies durch die Merkmale des Patentanspruches 15 erreicht.

Dadurch können die vorstehend zur elektromechanischen Bremsenanlage geltend gemachten Vorteile erzielt werden.

Die Unteransprüche betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Blockschaltbild einer ersten Ausführungsform einer gegenständlichen Bremsenanlage; und
Fig. 2 ein Blockschaltbild eines Teiles einer zweiten Ausführungsform einer gegenständlichen Bremsenanlage.

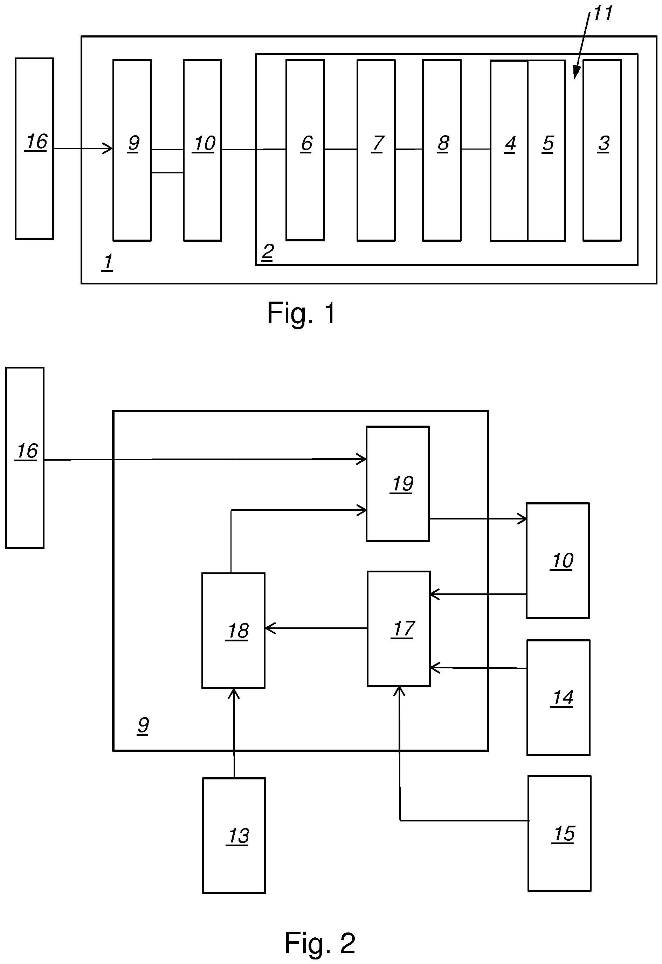

Die Fig. 1 zeigt ein Blockschaltbild einer bevorzugten Ausführungsform einer elektromechanischen Bremsenanlage 1 umfassend wenigstens eine elektromechanische Bremse 2, wobei die elektromechanische Bremse 2
- wenigstens eine Reibfläche 3,
- wenigstens einen Belagsträger 4 mit wenigstens einem Bremsbelag 5,
- wenigstens einen Elektromotor 6 zum vorgebbaren Bewegen des Belagsträgers 4,
- eine Betätigungsmechanik 7, an welcher der Belagsträger 4 gelagert ist, und welche mit dem Elektromotor 6 verbunden ist,
- wenigstens eine Feder mit einer Federsteifigkeit, welche wenigstens mittelbar auf den Belagsträger 4 wirkt, und
- vorzugsweise wenigstens eine Nachstellvorrichtung 8,
aufweist, wobei die Bremsenanlage 1 eine Steuer- und Kontrolleinheit 9 aufweist, welche dazu ausgebildet ist eingangsseitig eine Bremswirkungsanforderung zu empfangen, und auf Basis der Bremswirkungsanforderung ein Bremssteuersignal zu generieren und an einen Regler 10 des Elektromotors 6 auszugeben, wobei die Steuer- und Kontrolleinheit 9 dazu ausgebildet ist:
- aus wenigstens einem, während einer ersten Bewegung des Belagsträgers 4 mittels des Elektromotors 6 ermittelten ersten Wert wenigstens eines ersten Betriebsparameters wenigstens eines Teils der Bremse 2, wenigstens einen Betriebsverhaltenswert, insbesondere eine Betriebsverhaltenswertemenge, vorzugsweise eine Betriebsverhaltensfunktion, für ein reales Betriebsverhalten der betreffenden Bremse 2 zu ermitteln, und durch einen Vergleich des wenigstens einen realen Betriebsverhaltenswerts mit wenigstens einer gespeicherten Betriebsverhaltenserwartung wenigstens einen Korrekturfaktor, insbesondere wenigstens eine Korrekturfaktorenmenge, vorzugsweise wenigstens eine Korrekturkurve, zu ermitteln, und weiters
- das Bremssteuersignal um den wenigstens einen Korrekturfaktor, insbesondere die Korrekturfaktorenmenge, vorzugsweise die Korrekturkurve, zu korrigieren, und den Regler mit dem korrigierten Bremssteuersignal anzusteuern
- wobei die Steuer- und Kontrolleinheit 9 weiters dazu ausgebildet ist, eine Kalibrierung mittels einer Federkraft der wenigstens einen Feder während der ersten Bewegung vorzunehmen.

Dadurch kann eine vorgegebene Bremswirkung mit geringem Aufwand an erforderlichen Sensoren sehr genau eingestellt werden.

Dadurch kann eine Kalibrierung der Steuergrößen bzw. der Zusammenhänge innerhalb der Bremsenanlage durchgeführt werden. Insbesondere kann dadurch der Zusammenhang zwischen Strom und Motormoment kalibriert werden. Dadurch kann schnell, und ohne Durchführung eines Bremsvorganges, eine bereits relativ genaue Abschätzung der Verluste bzw. Toleranzen erfolgen. Dadurch kann schnell der Korrekturfaktor in der richtigen Größenordnung eingestellt werden. Dadurch wird die gesamte Messgenauigkeit erhöht. Dadurch ist es auch möglich sehr genau den Berührpunkt des Bremsbelags 5 an der Reibfläche 3 zu bestimmen, weil ab dann die kleine Kraft, die im Luftspalt nur durch die Feder verursacht wird, anzusteigen beginnt.

Durch die Kalibrierung an der wenigstens einen Feder kann die Genauigkeit der Bremsenanlage 1 deutlich gesteigert werden.

Dadurch werden ständig die jeweils vorherrschenden mechanischen Eigenschaften der Bremsenanlage 1, und deren Zusammenhang mit wenigstens einem, bei der Ansteuerung der Bremse 2 Verwendung findenden Betriebsparameter ermittelt, welche Eigenschaften bei der Betätigung der Bremse 2 berücksichtigt werden. Dadurch können Veränderungen der Bremsenanlage 1 sicher erkannt und berücksichtigt werden. Dadurch ist es möglich, ausgehend von einer Vorgabe einer Bremswirkung, die Bremse 2 derart anzusteuern, dass diese Bremswirkung auch tatsächlich erreicht wird, und zwar ohne dass hierfür ein aufwendiges und fehleranfälliges Kraftmesssystem, insbesondere ein Normalkraftmesssystem, erforderlich wäre. Die gegenständliche elektromechanische Bremsenanlage 1 ist auch weiterhin betriebssicher, auch wen ein, gegebenenfalls vorhandener Kraftsensor fehlerhaft sein sollte oder ausfällt.

Die gegenständliche elektromechanische Bremsenanlage 1 weist einen einfachen Aufbau auf, und ist sehr betriebssicher, da die ausgewerteten Betriebsparameter ohnedies für die Betätigung der Bremse 2 erforderlich sind.

Die gegenständliche Bremsanlage wird, bis auf einzelne Ausnahmen, anhand der besonders bevorzugten Ausführungsform beschrieben, bei welcher sowohl eine erste Bewegung als auch eine zweite Bewegung des Belagsträgers 4 vorgenommen wird. Wenngleich dies die besonders bevorzugte Ausführungsform darstellt, ist im Rahmen der Erfindung vorgesehen, dass auch lediglich die erste Bewegung des Belagsträgers 4 durchgeführt werden kann.

Dabei ist bevorzugt vorgesehen, dass bei der Bildung des Betriebsverhaltenswerts weiters wenigstens ein, während einer, der ersten Bewegung entgegen gesetzten zweiten Bewegung des Belagsträgers 4 mittels des Elektromotors 6 ermittelter zweiter Wert des ersten Betriebsparameters des Teils der Bremse 2 berücksichtigt wird.

Es hat sich gezeigt, dass eine Bremse 2 bzw. eine Bremsenanlage 1 bei der Bewegung des wenigstens einen Bremsbelags 5 in Richtung zur Reibfläche 3 ein, oftmals auch nur geringfügig, anderes Verhalten aufweist, als bei Bewegung des wenigstens einen Bremsbelags 5 in die entgegengesetzte Richtung, also weg von der Reibfläche 3. Dieses unterschiedliche Verhalten kann mehrere Ursachen haben, welche unterschiedlich stark wirken. Beispielsweise wird bei einem Bremsvorgang, der wenigstens eine Bremsbelag 5 entgegen dem Drehmoment des Elektromotors 6 gegen die Reibfläche 3 gedrückt. Dabei kommt es zu elastischen Verformungen. Es ist daher erforderlich, dass der Elektromotor 6 auch diese Verformungen bzw. die entsprechenden Verluste überwindet, um tatsächlich eine bestimmte Anpresskraft des Bremsbelags 5 an der Reibfläche 3 zu erzielen. Beim Lösen der Bremse 2, daher, bei Abheben bzw. Entfernen des Bremsbelages 5 von der Reibfläche 3 wirkt jedoch die, in den elastischen Verformungen der Betätigungsmechanik 7 gespeicherte Energie in derselben Richtung, wie die - umgelenkte - Bewegung des Elektromotors 6. Das Drehmoment am Elektromotor 6 ist daher beim Lösen der Bremse 2 entsprechend geringer als beim Betätigen der Bremse 2, da die bei den elastischen Verformungen gespeicherte Energie das Lösen der Bremse unterstützt. Dieses unterschiedliche Verhalten hat sich in der Praxis als relevant für das genaue Ansteuern der Bremsenanlage 1 erwiesen.

Weitere relevante Ursachen für dieses unterschiedliche Verhalten sind etwa Reibungsverluste, welche ebenfalls je Bewegungsrichtung unterschiedlich ausfallen können.

Indem bei der gegenständlichen Bremsanlage 1 sowohl das Verhalten bei einer Bewegung der Bremse 2 in Richtung eines Bremsvorganges als auch in Richtung eines Lösens der Bremse 2 ermittelt bzw. gemessen wird, werden die dabei ermittelten unterschiedlichen Eigenschaften bzw. Unterschiede beim Ansteuern der Bremsanlage berücksichtigt. Dabei wird das "momentane" Betriebsverhalten mit einer gespeicherten Erwartung verglichen, wodurch eine Verbesserung der Genauigkeit erzielt werden kann. Dabei kann diese Anpassung bzw. ein entsprechendes Nachführen während des gesamten Betriebes der Bremsenanlage 1 erfolgen.

Dadurch kann die Bremsenanlage 1 unter Berücksichtigung von Reibung, Steifigkeit, Trägheit und Verschmutzung der beteiligten beweglichen Teile in jede Bewegungsrichtung sicher und genau angesteuert bzw. betrieben werden. Dadurch ist eine genaue Positionssteuerung des wenigstens einen Bremsbelags 5 möglich.

Weiters können dadurch, insbesondere temperaturabhängige, Veränderungen der Viskosität der beteiligten Schmierstoffe sowie ebenfalls, insbesondere temperaturabhängige, Veränderungen der E-Module der Werkstoffe der, an der Bewegung beteiligten Einzelteile der Bremse 2 mitberücksichtigt werden.

Indem bei der gegenständlichen Bremsenanlage 1 sowohl das Verhalten bei einer Bewegung der Bremse 2 in Richtung eines Bremsvorganges als auch in Richtung eines Lösens der Bremse 2 ermittelt bzw. gemessen wird, werden die dabei ermittelten unterschiedlichen Eigenschaften beim Ansteuern der Bremsenanlage 1 berücksichtigt. Dadurch kann die Bremsenanlage 1 unter Berücksichtigung von Reibung, Steifigkeit, Trägheit und Verschmutzung der beteiligten beweglichen Teile in jede Bewegungsrichtung sicher und genau angesteuert bzw. betrieben werden. Dadurch ist eine genaue Positionssteuerung des wenigstens einen Bremsbelags 5 möglich.

Die erste bzw. zweite Bewegung kann dabei jeweils äußerst gering sein, und an der Grenze des messbaren liegen.

Die gegenständliche Erfindung betrifft eine elektromechanische Bremsenanlage 1, welche wenigstens die eigentliche elektromechanische Bremse 2 sowie eine zu deren Betrieb erforderliche Steuer- und Kontrolleinheit 9 umfasst, wobei noch weitere Komponenten, insbesondere Sensoren, Teil der elektromechanischen Bremsenanlage 1 sein können.

Die gegenständliche elektromechanische Bremsenanlage 1 ist dazu vorgesehen eine Relativbewegung zwischen zwei Teilen zu bremsen. Insbesondere ist die gegenständliche Bremsenanlage 1 dazu vorgesehen, wenigstens einen rotierenden Bauteil zu bremsen. Dabei kann es sich an sich um jede Art eines rotierenden Bauteils handeln, wobei die Bremse 2 auch zum Bremsen von linearen Bewegungen vorgesehen sein kann. Als solche kann die gegenständliche Bremsenanlage 1 beispielsweise Teil einer Rolltreppe, eines Aufzuges oder eines Windrades sein. Insbesondere ist die Bremsanlage 1 dazu vorgesehen, in ein, insbesondere ein- oder mehrspuriges, Fahrzeug eingebaut zu werden, bzw. ein Teil eines Fahrzeuges zu sein. Dabei kann es sich um jede Art eines Rad- oder Kettenfahrzeuges handeln. Insbesondere handelt es sich bei dem Fahrzeug um wenigstens ein Fahrzeug ausgewählt aus der Gruppe: Automobil, Flugzeug, Motorrad, KFZ-Anhänger, Traktor, Schienenfahrzeug. Die Bremsenanlage 1 kann dabei beispielsweise zum Bremsen von Antriebsrädern vorgesehen sein, bzw. auch zum Bremsen anderer beweglicher Teile einer Vorrichtung bzw. eines Fahrzeuges. Beispielsweise kann der Einsatz als Bremse einer Seiltrommel eines Krans vorgesehen sein.

Eine elektromechanische Bremse 2 kann im gegenständlichen Kontext jede Art einer Bremse 2 sein, bei der die Betätigung der Bremse 2, daher die Bewegung des Bremsbelags 5 in Richtung der Reibfläche 3 beim Bremsen bzw. das Lösen der Bremse 2, durch den Antrieb mittels eines Elektromotors 6 erfolgt. Dabei ist vorgesehen, dass die direkt vom Elektromotor 6 erzeugte Bewegung mittels einer Mechanik, der sog. Betätigungsmechanik 7, umgelenkt wird. Eine Bremse 2, bei welcher die eigentliche Betätigung mittels Hydraulik oder Pneumatik erfolgt, wird nicht als elektromechanische Bremse 2 angesehen, auch wenn dabei der Betriebsdruck des verwendeten Fluids mit einer elektrisch angetriebenen Pumpe erzeugt wird, und/oder wenn elektrisch betätigte Ventile verwendet werden.

Bei dem Elektromotor 6 kann es sich um jede Form eines Elektromotors 6 handeln, etwa um einen Linearmotor, eine Rotationsmaschine, einen DC-Motor oder einen AC-Motor usw. Bevorzugt ist vorgesehen, dass der Elektromotor 6 als Rotationsmaschine ausgebildet ist. Besonders bevorzugt ist weiters vorgesehen, dass der Elektromotor 6 als bürstenloser Gleichstrommotor ausgebildet ist. Ein derartiger Elektromotor 6 wird im Englischen auch als BLDC-Motor bezeichnet, wobei BLDC - in an sich bekannter Weise - für Brushless Direct Current steht.

Die elektromechanische Bremsenanlage 1 weist wenigstens einen Regler 10 auf, um den Elektromotor 6 anzusteuern bzw. eine entsprechende Regelung des Elektromotors 6 zu ermöglichen. Der Regler 10 bzw. die Regeleinheit ist elektrisch mit dem Elektromotor 6 verbunden, und beispielsweise umfassend einer Inverterschaltung oder Brückenschaltung ausgebildet. Der Regler 10 kann als jeder beliebige Regler sowie zufolge jeglichen beliebigen Verfahrens ausgebildet sein, sofern der Regler dazu ausgebildet bzw. in der Lage ist zu regeln, und zwar insbesondere eine Position und/oder ein Moment. Der Regler 10 muss selbstverständlich technisch dazu in der Lage sein, den jeweils ausgewählten Elektromotor 6 zu regeln.

Bei der gegenständlich bevorzugten Ausführung des Elektromotors 6 als BLDC-Motor ist bevorzugt vorgesehen, dass der Regler 10 als speziell für BLDC-Motoren ausgebildeter bzw. vorgesehener Regler 10 ausgebildet ist. Solche Regler 10, welche eine Positions-, Moment- und Drehzahlregelung umfassen, sind in dem betreffenden technischen Gebiet der Regelung von BLDC-Motoren bekannt. Insbesondere ist gegenständlich vorgesehen, dass ein derartiger Regler 10 Position, Momentbegrenzung und Drehzahlbegrenzung gleichzeitig an die Steuer- und Kontrolleinheit 9 übergeben.

Weiters kann dabei vorgesehen sein, dass der Regler 10 als Vektorregler ausgebildet ist. Ein Vektorregler wird im Englischen auch als FOC: Field Oriented Control bezeichnet.

Weiters kann auch ein Regler 10 umfassend wenigstens einen PID-Regler ausgebildet sein.

Bevorzugt kann zudem vorgesehen sein, dass der Regler für die Durchführung der ersten Bewegung einen ersten Parametersatz, und für die Durchführung der zweiten Bewegung zweiten Parametersatz anwendet.

Selbstverständlich kann eine Bremse 2 auch mehr als nur einen Elektromotor 6 aufweisen. Bevorzugt kann vorgesehen sein, dass die Bremse 2 weiters einen, in den Figuren nicht dargestellten, zweiten Elektromotor aufweist, welcher zweite Elektromotor derart ausgebildet sei kann bzw. ein entsprechend selbsthemmendes Getriebe, etwa einen Spindeltrieb oder ein Schneckenrad, aufweisen kann, dass dieser ein vorgebbares Moment auch bei Stromlosigkeit halten kann. Dadurch kann einfach eine Parkbremsen-Funktion erreicht werden. Der zweite Elektromotor kann zufolge sämtlicher Ausführungsformen bzw. Verfahren, wie diese zum Elektromotor 6 beschrieben sind, betrieben werden. Dabei ist insbesondere vorgesehen, dass die jeweils zu einem der beiden Elektromotoren ermittelten Korrektorfaktoren auch beim Betrieb des anderen der beiden Elektromotoren berücksichtigt werden. Insbesondere kann dadurch, bei der Verwendung des optionalen zweiten Elektromotors zur Umsetzung einer Parkfunktion, gewährleistet werden, dass der Bremsbalg mit ausreichender, aber nicht zu hoher Kraft auf die Reibfläche gedrückt wird.

In diesem Zusammenhang kann weiters vorgesehen sein, einen derartig ausgebildeten zweiten Elektromotor bei einem normalen Bremsvorgang derart anzusteuern, dass dieser einen Teil der Bewegung des Belagsträgers 5 verursacht, etwa in Form einer Grobeinstellung der Position des Belagsträger 5, und dass der erste Elektromotor 6 die Feineinstellung des Belagsträgers vornimmt.

Selbstverständlich kann der zweite Elektromotor auch lediglich aus Redundanzgründen vorgesehen sein, um die Funktion der Bremsenanlage 1 auch bei Ausfall des Elektromotors 6 zu gewährleisten.

Die elektromechanische Bremse 2 weist wenigstens eine Reibfläche 3 sowie wenigstens einen Bremsbelag 5 zum Zusammenwirken mit der Reibfläche 3 auf. Die Reibfläche 3 kann insbesondere als Bremsscheibe einer Scheibenbremse oder als Bremstrommelfläche bei einer Trommelbremse ausgebildet sein. Weiters kann die Reinfläche in Form einer Schiene ausgebildet sein, etwa wenn eine lineare Bewegung gebremst wird.

Der wenigstens eine Bremsbelag 5 ist auf wenigstens einem Belagsträger 4 befestigt. Bevorzugt sind je Reibfläche 3 mehrere Bremsbeläge 5 je Bremse 2 vorgesehen.

Der wenigstens eine Elektromotor 6 ist mittels einer Betätigungsmechanik 7 mit dem Belagsträger 4 verbunden, um diesen zu bewegen, bzw. ist der Belagsträger 6 an der Betätigungsmechanik 7 gelagert. Beispielsweise kann die Betätigungsmechanik 7 als Teil einer Keilbremse oder einer Kugelspindelbremse oder einer Kugelrampenbremse ausgebildet sein. Weiters kann die Betätigungsmechanik 7 Nocken bzw. Exzenter aufweisen. Die gegenständliche Erfindung kann jedoch unabhängig von einer speziellen Ausgestaltung der Betätigungsmechanik 7 umgesetzt werden.

Gemäß einer bevorzugten Weiterbildung der gegenständlichen Erfindung ist weiters vorgesehen, dass die Betätigungsmechanik 7 ein nicht lineares Übersetzungsverhältnis aufweist. Dies ist derart zu verstehen, dass die Betätigungsmechanik 7 einen mechanischen Eingang aufweist, welcher mit dem Elektromotor 6 verbunden ist, dass die Betätigungsmechanik 7 einen mechanischen Ausgang aufweist, welcher mit dem Belagsträger 4 verbunden ist, und dass die Betätigungsmechanik 7 derart ausgebildet ist, dass eine Bewegung am Eingang über einen vorgebbar nicht linearen Zusammenhang mit einer Bewegung des Ausgangs zusammenhängt. Mit anderen Worten: eine bestimmte eingangsseitige Verstellung, daher eine mechanische Eingangsgröße, wird nicht mittels eines linearen Zusammenhangs sondern mittels eines nicht linearen Zusammenhanges, auf eine Verstellung bzw. Bewegung des Belagsträgers 4 abgebildet. Insbesondere ist eine solche nicht-lineare Betätigungsmechanik 7 derart ausgebildet, dass ein Spalt 11 zwischen einer Ruheposition des Bremsbelags 5 und der Reibfläche 3 sehr schnell bzw. mit nur geringer Bewegung des Elektromotors 6 zurückgelegt werden kann. Insbesondere ist vorgesehen, dass der Elektromotor 6 in einem optimalen Bereich betrieben wird, bei dem auch eine sichere Bremsbetätigung über Toleranzen möglich ist. Weiters ist dabei bevorzugt vorgesehen, dass der Elektromotor 6 im Bereich einer Kontaktposition des Bremsbelags 5 an der Reibfläche 3 derart betrieben wird, dass der Elektromotor 6 in einem Bereich betrieben wird, in welchem dieser seine höchste abzugebende Leistung aufweist.

Ein derartiger nicht linearer Zusammenhang kann beispielsweise mittels wenigstens einer Nocke erreicht werden, welche entsprechend geformt ist. Eine entsprechende Nicht-Linearität ist, bevorzugt in Form einer Übertragungsfunktion bzw. einer Übertragungsmenge, in einer Speichereinheit 13 der Bremsenanlage 1 abgelegt, und steht der Steuer- und Kontrolleinheit 9 zur Verfügung.

Um den Spalt 11 schnell zu überbrücken kann weiters vorgesehen sein, den Elektromotor 6 gegebenenfalls mittel sog. Feldschwächung mit einer erhöhten Drehzahl zu betreiben.

Die Vorteile der mechanisch erreichten Nichtlinearität können verfahrensgemäß somit durch Ausnutzung solcher Möglichkeiten des Elektromotors 6 ergänzt werden, also dass der Elektromotor 6 mit höherer Drehzahl aber dafür verringertem Motormoment betrieben wird, wie dies z.B. mit Feldschwächung möglich ist oder durch Umschalten der Wicklungen, z.B. Polpaarzahlen.

Der Belagsträger 4 ist dazu vorgesehen, mittels des Elektromotors 6, sowie gegebenenfalls nach entsprechender Umlenkung durch die Betätigungsmechanik 7, eine erste Bewegung in wenigstens einer ersten Bewegungsrichtung durchzuführen bzw. in einer solchen ersten Bewegung bewegt zu werden. Bevorzugt wird als erste Bewegung des Belagsträgers 4 dessen Bewegung in Richtung auf die Reibfläche 3 zu angesehen.

Der Belagsträger 4 ist weiters dazu vorgesehen, mittels des Elektromotors 6 in einer zweiten Bewegung in wenigstens einer zweiten Bewegungsrichtung bewegt zu werden, wobei die zweite Bewegung der ersten Bewegung entgegen gerichtet ist. Bevorzugt wird als zweite Bewegung des Belagsträgers 4 dessen Bewegung von der Reibfläche 3 weg angesehen.

Vorzugsweise weist die Bremse 2 weiters wenigstens eine Nachstellvorrichtung 8 auf, welche mit der Betätigungsmechanik 7 verbunden ist, wobei diese Nachstellvorrichtung 8 lediglich bei besonders bevorzugten Ausführungsformen vorgesehen ist. Mechanische Nachstellvorrichtungen 8 sind, insbesondere aus dem Bereich der LKW-Bremsen seit vielen Jahrzehnten in unterschiedlichen Ausführungsvarianten bekannt, und zumindest bei LKW-Bremsen Standard. Bei der gegenständlichen Bremsanlage 1 kann auch eine weniger genaue Nachstellung bzw. eine Ungenauigkeit der Nachstellvorrichtungen 8 ausgeglichen werden.

Die Bremse 2 weist weiters bevorzugt wenigstens einen mechanischen Energiespier auf, welche insbesondere als Feder ausgebildet ist, welche wenigstens mittelbar auf den Belagsträger 4 wirkt. Derartige Federn in Bremsen sind an sich bekannt und weit verbreitet. Derartige Federn vergrößern in der Regel einen Hysterese-Effekt zwischen dem Verhalten der Bremse 2 bei der ersten Bewegung gegenüber der zweiten Bewegung. Bei der gegenständlichen Bremsenanlage 1 kann auch dieser unterschiedliche Einfluss der Feder sowie deren alterungsbedingte Veränderungen, etwa der Federsteifigkeit, erkannt und ausgeglichen werden.

Die Bremsenanlage 1 weist eine Steuer- und Kontrolleinheit 9 auf, welche dazu vorgesehen und entsprechend ausgebildet ist, eingangsseitig eine Bremswirkungsanforderung zu empfangen, und auf Basis der Bremswirkungsanforderung ein Bremssteuersignal zu generieren und an den Regler 10 des Elektromotors 6 auszugeben.

Die Steuer- und Kontrolleinheit 9 ist insbesondere umfassend einem Mikrocontroller und/oder Mikroprozessor ausgebildet, wobei weitere elektronische Bauteile bzw. Baugruppen Teil der Steuer- und Kontrolleinheit 9 sein können. Die Steuer- und Kontrolleinheit 9 kann auch zumindest teilweise als Teil eines programmierbaren Logikbauteils ausgebildet sein. Insbesondere kann die Steuer- und Kontrolleinheit 9 aus mehreren Teilen bzw. Baugruppen bestehen, wobei einzelne Vorgänge bzw. Verarbeitungsschritte von bestimmten Teilen dieser Mehrzahl an Teilen bzw. Baugruppen durchgeführt werden.

Die Steuer- und Kontrolleinheit 9 ist dazu vorgesehen ein, von Seiten eines, menschlichen oder künstlichen, Fahrers bzw. Lenkers eines Fahrzeuges bzw. eines menschlichen oder künstlichen Operateurs einer Maschine an eine Interaktionsschnittstelle 16 des betreffenden Fahrzeuges bzw. der betreffenden Maschine mitgeteiltes Bedürfnis nach Verlangsamung der Geschwindigkeit bzw. Verzögerung in eine entsprechende Betätigung des Elektromotors 6 der Bremse 2 umzusetzen. Die Interaktionsschnittstelle 16 kann beispielsweise ein Sensor am sog. Bremspedal sein, eine nachrichtentechnische Schnittstelle eines Fahrzeugcomputers oder ein Bedienelement an einem Kontrollboard. Eine Eingabeschnittstelle der gegenständlichen Bremsenanlage 1 ist - als Teil eines Fahrzeuges - wenigstens mittelbar mit der Interaktionsschnittstelle 16 des betreffenden Fahrzeugs verbunden.

Die Steuer- und Kontrolleinheit 9 verursacht die ersten bzw. zweiten Bewegungen des Belagsträgers 4, welche jeweils zumindest unter Mitwirkung des Elektromotors 6 erfolgen. Während der Durchführung der ersten bzw. der zweiten Bewegung kommt es zu einer Veränderung wenigstens eines Betriebsparameters der Bremse 2.

Ein Betriebsparameter ist dabei insbesondere eine Größe, deren Veränderung, Steuerung bzw. Reglung für den grundlegenden Betrieb der Bremse 2 erforderlich ist. Insbesondere ist der Betriebsparameter ein Strom, mit dem der Elektromotor 6 angesteuert wird, bzw. welcher von dem Elektromotor 6 aufgenommen wird. Insbesondere ist daher vorgesehen, dass der erste Betriebsparameter eine Stromaufnahme des Elektromotors 6 ist, und dass der erste Wert eine erste Stromaufnahme I₁ des Elektromotors 6 ist, und dass der zweite Wert eine zweite Stromaufnahme I₂ des Elektromotors 6 ist.

Wie eingangs bereits dargelegt, sind bereits Ansätze bekannt, eine Bremse über die Stromaufnahme eines antreibenden Elektromotors 6 zu steuern bzw. zu regeln, um dessen Drehmoment, welches auch als Motormoment bezeichnet werden kann, zu regeln. Bevorzugt wird das Drehmoment als eigentliche Regelgröße verwendet. Da Motorstrom und Moment bekanntermaßen in Zusammenhang stehen, gelten diese Begriffe im Folgenden als gleichwertig.

Dabei sei darauf hingewiesen, dass ein unmittelbarer Zusammenhang zwischen dem Drehmoment des Elektromotors 6 und dessen Stromaufnahme und/oder der Anpresskraft des Bremsbelages 5 auf die Reibfläche 3 nur dann gegeben ist, wenn die weiters vorhandene Betätigungsmechanik 7 linear ist. Also nur dann, wenn die Betätigungsmechanik 7 keine nicht lineare, über den Betätigungshub veränderliche Übersetzung aufweist. Sofern daher die Betätigungsmechanik 7 entsprechend nicht linear ausgebildet ist, muss dies bei der Steuerung bzw. Regelung, über die in der Speichereinheit 13 abgelegte Übertragungsfunktion mit berücksichtigt werden, da ansonsten eine entsprechende Steuerung bzw. Regelung nicht möglich ist.

Weiters gemäß einer bevorzugten Ausführungsform vorgesehen, dass der Zusammenhang zwischen Drehmoment und Stromaufnahme des Elektromotors 6 weiters an bestimmte Parameter angepasst wird, welche Parameter insbesondere umfassen: Drehzahl, Magnetschwächung aufgrund, Alterung, Temperatur. Da sich die bewegten Massen des Elektromotors nicht verändern, kann diese bzw. die entsprechende Massenträgheit in den Betriebsverhaltenswerten mit berücksichtig werden. Bei Durchführung des gegenständlichen Verfahrens unter Ermittlung entsprechender Korrekturfaktoren werden auch die Veränderungen am Elektromotor mit berücksichtigt.

Die Begriffe Steuern und Regeln werden gegenständliche gleichwertig verwendet.

Der wenigstens eine Betriebsparameter kann auch eine Leistungsaufnahme, eine Spannung oder eine Energie sein.

Aus der bevorzugten Ausbildung des Regler 10 als Vektorregler stehen als Betriebsparameter sowohl der Strom I_{q} des Vektorreglers als Stromaufnahmewert des Elektromotors 6 als auch die Stellung des Rotors des betreffenden Elektromotors 6 gegenüber dessen Stator zur Verfügung.

Bevorzugt ist vorgesehen, dass ermittelte Betriebsparameter vor deren Verarbeitung durch die Steuer- und Kontrolleinheit 9 bzw. den Regler 10 nicht zu stark tiefpassgefiltert bzw. geglättet werden, da dadurch die zeitliche Reaktionsfähigkeit der Bremsenanlage 1 verringert wird. Da jedoch der gänzliche Verzicht auf eine Tiefpassfilterung dazu führen würde, dass die gesamte Regelstrecke bereits auf kleinste Störeinflüsse mit jeweils geringen Veränderungen der Position reagiert, und umgangssprachlich bezeichnet "nervös" reagiert. Diese an sich gegensätzlichen Forderungen einer gewissen zeitlichen Stabilität verbunden mit einer kurzen Reaktionszeit können dadurch erreicht werden, dass die ermittelten Betriebsparameter, insbesondere Strom- und/oder Momentwerte, mittels eines sog. kompensierten Spannungsteilers, wie er etwa aus einem Tastkopf für ein Oszilloskop bekannt ist. Der entsprechende Spannungsteiler kann beispielsweise, und bevorzugt nicht einschränkend, durch Kombination eines Hochpasses mit einem Tiefpass.

Bevorzugt ist eine Messgröße eines Kraftmesssystems, insbesondere eines Normalkraftsensors, oder eine Messgröße eines Bremsmomentsensors kein Betriebsparameter. Entsprechend ist bevorzugt vorgesehen, dass die Bremsenanlage 1 kraftmesssystemfrei, insbesondere normalkraftsensorfrei, ausgebildet ist und/oder auch ohne die Messwerte eines entsprechenden Kraftmesssystems bzw. Normalkraftsensors funktioniert.

Sollte jedoch ein Kraftmesssystems bzw. Normalkraftsensor Teil der Bremsenanlage sein, kann ein solches Kraftmesssystems bzw. ein solcher Normalkraftsensor ebenfalls kalibriert werden.

Es ist vorgesehen, dass wenigstens ein derartiger Betriebsparameter als Eingangsgröße an die Steuer- und Kontrolleinheit 9 übermittelt wird. Es kann auch vorgesehen sein, mehr als einen Betriebsparameter zu erfassen und zu verarbeiten.

Während der Belagsträger 4 die erste Bewegung durchführt, wird wenigstens ein erster Wert, insbesondere wenigstens eine erste Wertemenge, eines Betriebsparameters ermittelt. Während der Belagsträger 4 die zweite Bewegung durchführt, wird wenigstens ein zweiter Wert, insbesondere wenigstens eine zweite Wertemenge, des Betriebsparameters ermittelt.

Es ist vorgesehen, dass die Steuer- und Kontrolleinheit 9 dazu ausgebildet ist, aus dem wenigstens einen ersten Wert, insbesondere der ersten Wertemenge, des Betriebsparameters sowie dem wenigstens einen zweiten Wert, insbesondere der zweiten Wertemenge, des Betriebsparameters, wenigstens einen Betriebsverhaltenswert für ein reales Betriebsverhalten der betreffenden Bremse 2 zu ermitteln. Vorzugsweise ermittelt die Steuer- und Kontrolleinheit 9 dabei eine Betriebsverhaltenswertemenge, vorzugsweise eine Betriebsverhaltensfunktion. Dies ist durch den Block 17 in Fig. 2 veranschaulicht.

Die Steuer- und Kontrolleinheit 9 ist weiters dazu ausgebildet, den wenigstens einen Betriebsverhaltenswert mit wenigstens einer Betriebsverhaltenserwartung bzw. einem Betriebsverhaltenserwartungswert zu vergleichen. Durch einen Vergleich des wenigstens einen Betriebsverhaltenswerts mit wenigstens einer gespeicherten Betriebsverhaltenserwartung, ermittelt oder bildet die dazu ausgebildete Steuer- und Kontrolleinheit 9 weiters wenigstens einen Korrekturfaktor. Insbesondere bildet bzw. ermittelt die Steuer- und Kontrolleinheit 9 dabei wenigstens eine Korrekturfaktorenmenge, vorzugsweise wenigstens eine Korrekturkurve.

Die Steuer- und Kontrolleinheit 9 ist weiters dazu ausgebildet, im Falle einer, an deren Eingang anliegenden Bremswirkungsanforderung, ein daraus abgeleitetes bzw. gebildetes Bremssteuersignal um den wenigstens einen Korrekturfaktor, insbesondere die Korrekturfaktorenmenge, vorzugsweise die Korrekturkurve, zu korrigieren, und den Regler 10 mit dem korrigierten Bremssteuersignal anzusteuern. Dies ist durch den Block 19 in Fig. 2 veranschaulicht.

Indem für die Bildung des entsprechenden wenigstens einen Korrekturfaktors stets die erste und die entgegengesetzte zweite Bewegung des Belagsträgers 4 berücksichtigt werden, können das jeweils unterschiedliche Verhalten bzw. die Eigenschaften der Bremse 2 sehr gut in die Steuerung einfließen. Dabei ist es für die ermittelten Abweichungen an sich unerheblich, welche konkrete Ursache diese haben, bzw. welche Vielzahl an Ursachen zusammen zu der ermittelten bzw. beobachteten Abweichung führen. Wesentlich ist, dass diese berücksichtigt werden.

Zur Ermittlung des wenigstens einen Korrekturfaktors weist die Steuer- und Kontrolleinheit 9 eine Einheit 18 auf, welche dazu ausgebildet ist die ermittelten realen Betriebsverhaltenswerte mit den gespeicherten Betriebsverhaltenserwartungen zu vergleichen und einen entsprechenden Korrekturwert zu bilden. Dies ist im Rahmen der digitalen Signalverarbeitung in unterschiedlichen Varianten möglich, und muss nicht näher erläutert werden.

Die wenigstens eine Betriebsverhaltenserwartung bzw. der wenigstens eine Betriebsverhaltenserwartungswert ist in einer Speichereinheit 13 abgelegt, welche Teil der elektromechanischen Bremsenanlage 1 ist, und welche mit der Steuer- und Kontrolleinheit 9 verbunden ist.

In der Speichereinheit 13 sind weiters allgemeine Daten zu einer bestimmten Bremse 2 abgelegt. Dies sind insbesondere die Soll-Abmessungen der Bremse, sowie die Soll-Reibbeiwerte. Weiters werden dabei zumindest die letzten, vor einer Außerbetriebnahme der jeweiligen Bremsenanlage 1 ermittelten Korrekturwerte gespeichert.

Die erste und die zweite Bewegung können zu unterschiedlichen Zeitpunkten bzw. unterschiedlichen Betriebszuständen der Bremsenanlage 1 durchgeführt werden. Weiters kann das Maß der ersten und zweiten Bewegung sehr unterschiedlich sein, je nachdem während welchen Betriebszustandes diese durchgeführt werden.

Bevorzugt ist vorgesehen, dass die Steuer- und Kontrolleinheit 9 dazu ausgebildet ist, in wenigstens einem bremswirkungsanforderungsfreien Zeitraum den Elektromotor 6 derart anzusteuern, dass die erste Bewegung und die zweite Bewegung des Belagsträgers 4 lediglich innerhalb eines Spalts 11 zwischen Reibfläche 3 und Bremsbelag 5 erfolgen. Die beiden Bewegungen finden daher ohne jeden Kontakt des Bremsbelages 5 mit der Bremsscheibe respektive der Reibfläche 3 statt. Der dabei ermittelte wenigstens eine Korrekturfaktor bildet insbesondere innere Verluste, etwa Reibungsverluste und Hysterese-Effekte an den Lagern, und/oder Eigenschaften, insbesondere Elastizität und Massenträgheit, der Bremse 2 ab. Dabei werden auch Effekte aufgrund von Haft-Gleitreibungsübergängen erfasst.

Insbesondere ist dabei vorgesehen, dass diese Art der ersten und zweiten Bewegung bei jeder neuen Inbetriebnahme des Fahrzeuges, in welchem die betreffende Bremsenanlage 1 verbaut ist, durchgeführt wird, wodurch bereits der erste Bremsvorgang einer jeden neu angetretenen Fahrt mit jeweils aktuellen Korrekturwerten erfolgt. Dadurch kann bereits bei der ersten Betätigung eine hohe Genauigkeit der Bremswirkung erzielt werden.

Da die Bremsenanlage 1 wenigstens eine Feder umfasst, ist vorgesehen, dass auch eine Kalibrierung der Bremsenanlage 1 erfolgt. Die Federsteifigkeit der Feder ist der Steuer- und Kontrolleinheit 9 bekannt. Insbesondere ist dabei vorgesehen, dass diese im Rahmen einer Endabnahme einer neu gefertigten Bremsenanlage 1 messtechnisch ermittelt und in der Speichereinheit 13 abgelegt wird. Bei der Durchführung der ersten sowie gegebenenfalls der zweiten Bewegung wirken die Reibungsverluste sowie die Feder, wobei die Feder je Bewegungsrichtung eine entgegengesetzte Kraft ausübt. Insbesondere sofern eine, auf ein schnelles Überwinden des Spalts 11 ausgelegte, nicht lineare Betätigungsmechanik 7 vorgesehen ist, funktioniert diese Art der Kalibrierung bei ersten und der bevorzugten zweiten Bewegungen lediglich innerhalb des Spalts 11 sehr gut, auch wenn dabei die Kraft seitens der Feder sehr gering ist. Auf weitere Details zu der wenigstens einen Feder wird gegen Ende der gegenständlichen Ausführungen weiters eigegangen.

Weiters ist bevorzugt vorgesehen, diese Art der ersten und zweiten Bewegung auch während der Fahrt des Fahrzeuges in kurzen zeitlichen Abständen, etwa alle 10 Minuten, zu wiederholen. Als erster Bremsvorgang kann auch ein Bremsvorgang nach einer längeren Phase ohne Bremsung bezeichnet werden. Ebenso ein Bremsen nach einer vorgebbar großen Veränderung der Umgebung.

Weiters ist bevorzugt vorgesehen, dass die Steuer- und Kontrolleinheit 9 dazu ausgebildet ist, während eines Bremsvorganges den Elektromotor 6 derart anzusteuern, dass die erste Bewegung und die zweite Bewegung des Belagsträgers 4 dem Druck des Bremsbelages 5 gegen die Reibfläche 3 überlagert sind. Dies entspricht der Überlagerung eines DC-Signals mit einem geringfügigen AC-Signal. Dabei kann es sich mehr um ein Erhöhen bzw. Verringern des Anpressdruckes als um eine merkliche Bewegung des Belagsträgers 4 handeln. Der dabei ermittelte wenigstens eine Korrekturfaktor bildet insbesondere Eigenschaften der Reibfläche 3 und des Bremsbelags 5 zum Zeitpunkt des Bremsvorganges ab, wobei weiters auch die Elastizität und Steifigkeit der Bremse 2 Einfluss auf den dabei ermittelten Korrekturfaktor haben können.

Insbesondere ist dabei vorgesehen, dass die jeweils neu ermittelten Daten sogleich Eingang in die Ansteuerung des Elektromotors 6 finden.

In diesem Zusammenhang ist bevorzugt vorgesehen, dass die Steuer- und Kontrolleinheit 9 dazu ausgebildet ist, die erste und zweite Bewegung des Belagsträgers 4 derart zu steuern, dass dadurch verursachte Schwankungen des Motordrehmoments des Elektromotors 6 geringer als 3% eines jeweiligen Bremsmotordrehmoments sind. Dadurch kann erreicht werden, dass zwar Daten ermittelt werden können, wobei die Schwankungen in der Anpresskraft der Bremsbeläge 5 an der Reibfläche 3 derart gering sind, dass diese für einen Fahrer des Fahrzeuges nicht wahrnehmbar sind.

Gemäß einer bevorzugten Weiterbildung einer gegenständlichen Bremsenanlage 1 ist vorgesehen, dass dieser wenigstens ein erster Temperatursensor 14 zugeordnet ist, daher dass diese mit wenigstens einem ersten Temperatursensor 14 verbunden ist und/oder, dass ein solcher erster Temperatursensor 14 Teil der Bremsenanlage 1 selbst ist. Der erste Temperatursensor 14 ist mit der Steuer- und Kontrolleinheit 9 verbunden. Die Sensoren können die Umgebungstemperatur oder Temperaturen in der Bremse 2 oder der Elektronik oder im Motor erfassen, je nachdem wo diese angeordnet sind. Die Steuer- und Kontrolleinheit 9 ist dazu ausgebildet wenigstens bei einem vorgebbaren Betriebszustand der Bremsenanlage 1 einen Temperaturwert von dem ersten Temperatursensor 14 einzulesen, und zu dem Temperaturwert wenigstens einen Wert der Betriebsverhaltenserwartung aus der Speichereinheit 13 auszuwählen. Entsprechend ist in diesem Zusammenhang bevorzugt vorgesehen, dass die vorgebbare Mehrzahl Betriebsverhaltenserwartungswerte, insbesondere Wertemengen, vorzugsweise Funktionen, für die wenigstens eine Betriebsverhaltenserwartung jeweils für wenigstens zwei, insbesondere für eine vorgebbare Mehrzahl, unterschiedlicher Temperaturen in der Speichereinheit 13 abgelegt sind.

Insbesondere ist vorgesehen, dass das Einlesen der Temperatur und deren Berücksichtigung im Zuge der Inbetriebnahme des betreffend ausgestatteten Fahrzeuges erfolgt. Weiters ist bevorzugt vorgesehen, dass deren Einlesen und Berücksichtigen in vorgebbaren Intervallen und/oder bei Überschreiten eines vorgebbaren Grenztemperaturintervalls erfolgt. Dadurch kann die Bremsenanlage 1 noch vor deren ersten Betätigung bzw. nach einer längeren Nichtbenützung an die Umgebungsbedingungen angepasst werden. Dabei ist eine besonders hohe Genauigkeit des Temperatursensors 14 nicht erforderlich, da dieser nur hilft sog. Default-Werte bzw. Settings für den Betrieb der Bremsenanlage 1 auszuwählen. Sobald die Bremsenanlage 1 in Betrieb ist, erfolgt durch das Durchführen der ersten und zweiten Bewegung des Belagsträgers eine weitere Anpassung der Bremsenanlage 1.

Die Steuerung der Bremse 2 kann an sich auf zwei unterschiedliche Arten erfolgen, entweder als sog. "Positionssteuerung" des wenigstens einen Bremsbelags 5, oder durch Vorgabe eines Zielbremsmoments, in Form eines zu erreichenden Motordrehmoments.

Bei der "Positionssteuerung" wird die Motorposition, insbesondere als Motordrehungsbogenlänge oder als Winkel oder als eine Position eines vorgebbaren Teils der Betätigungsmechanik 7 bzw. des Belagsträgers 4 oder des Bremsbelages 5 vorgegeben. Über die gegenständlich bekannten Eigenschaften der Bremse kann ein Zusammenhang zwischen einer bestimmten Position und einem bestimmten, zu erwartenden Drehmoment des Elektromotors bei Erreichen der Position ermittelt werden, bzw. ist ein solcher Zusammenhang als Erwartungswert in der Speichereinheit 13 abgelegt. Das zu erwartende Drehmoment kann wiederum als zu erwartende Stromaufnahme bzw. als Stromaufnahmeerwartungswert des Elektromotors 6 angegeben werden.

Bevorzugt ist dabei vorgesehen, dass die vorgebbare Mehrzahl an Betriebsverhaltenserwartungswerten jeweils eine bestimmte Motordrehungsbogenlänge mit einem Stromaufnahmeerwartungswert des Elektromotors 6 in Verbindung setzt.

Als Motordrehungsbogenlänge wird die gesamte, durch den Elektromotor 6 durchzuführende Verdrehung bezeichnet, welche in der Regel - aufgrund eines entsprechenden Übersetzungsverhältnisses der Betätigungsmechanik 7 - mehr als eine vollständige Umdrehung darstellt. Wenngleich die Bogenlänge definitionsgemäß in Radiant gemessen wird, ist in der Praxis die Angabe eines Wertes in Grad üblich. Beispielsweise kann die Motordrehungsbogenlänge 870 Grad betragen. Dies bedeutet, dass der Elektromotor 6 - ausgehend von einer Ruheposition - zwei vollstände Umdrehungen durchführt, gefolgt von weiteren 150 Grad.

Entsprechend ist die Steuer- und Kontrolleinheit 9 bevorzugt dazu ausgebildet, bei Eingang einer Bremswirkungsanforderung mit der Betriebsverhaltenserwartung sowie dem wenigstens einen Korrekturwert ein Bremssteuersignal zu erzeugen und an den Regler 10 auszugeben. Dadurch ist eine zielgenaue Positionssteuerung des Elektromotors 6 bzw. der Bremswirkung möglich.

Ein Vorteil der Positionssteuerung ist, dass diese nur sehr geringere Hysterese-Effekte an dem Bremsbelag 5 verursacht. Da ein bestimmte Position vorgegeben wird, wird der Elektromotor 6 auch so bewegt bzw. betätigt, dass diese Position bzw. eine entsprechend um einen Korrekturwert korrigierte Position auch erreicht wird, wobei Haft- und Gleitreibungseffekte kaum relevant sind, da es für die Änderung einer Position erforderlich ist eine Ruhe- bzw. Ausgangsposition zu verlassen, und zwar ungeachtet allfälliger Haftreibungseffekte.

Bevorzugt ist im Zusammenhang mit der sog. Positionssteuerung weiters vorgesehen, dass die Regelung ohne Begrenzung der maximalen Stromaufnahme durch den Elektromotor 6 ausgebildet ist, bzw. dass eine entsprechende Begrenzung nur für gewisse Betriebszustände gültig ist, und bei anderen Betriebszuständen überschritten werden kann. Dies ist insbesondere in Zusammenhang mit sog. BLDC-Motoren vorteilhaft, welche - aufgrund des typischerweise geringen Spulenwiderstandes - oftmals sehr hohe Anlaufströme aufweisen. Dabei ist weiters bevorzugt vorgesehen, dass die Steuer- und Kontrolleinheit 9 aus einer Bremswirkungsanforderung sowie den gegenwärtig vorherrschenden Positionsdaten eine Zielbeschleunigung ermittelt, sowie eine Kette von Positionsschritten, und zwar derart, dass Stromspitzen, wie diese beim Anfahren eines Elektromotors oftmals auftreten, so weit als möglich vermieden werden, jedoch nicht gänzlich durch die Steuer- und Kontrolleinheit 9 verhindert werden. Durch eine entsprechende Ausbildung der Steuer- und Kontrolleinheit 9 können sowohl Stromspitzen weitestgehend vermieden werden, als auch die Betriebssicherheit erhöht werden, da insbesondere in Notfällen, ohne Rücksicht auf das weitere Schicksal der Anlage, die maximal mögliche Stromaufnahme seitens der Bremsenanlage zugelassen wird. Dadurch kann etwa eine Not- bzw. Gefahrenbremsung ohne Limitierung der maximalen Stromaufnahme unter Einbeziehung sämtlicher verfügbarer Mittel bzw. Ressourcen durchgeführt werden.

Bei der Vorgabe eines Zielbremsmoments, dies kann auch als "kraftgesteuert" bzw. Kraftsteuerung bzw. Momentsteuerung bezeichnet werden, wird ein Drehmoment des Elektromotors vorgegeben. Es kann auch ein anderes Moment oder eine Kraft an einer anderen Stelle bzw. an einem anderen Teil der Bremse 2 vorgegeben werden, sofern dieses Moment bzw. diese Kraft direkt, daher lediglich über mechanische Teile, wie Getriebe und/oder Gestänge, mit dem Antrieb durch den Elektromotor 6 zusammenhängt.

Es ist daher in diesem Zusammenhang weiters bevorzugt vorgesehen, dass die Steuer- und Kontrolleinheit 9 dazu ausgebildet ist, das Bremssteuersignal in Form eines, durch den Elektromotor 6 zu erreichenden Motordrehmoments zu ermitteln, und dass die Steuer- und Kontrolleinheit 9 dazu ausgebildet ist, die Motordrehungsbogenlänge des Elektromotors 6 mit einem entsprechenden Motordrehungsbogenlängenerwartungswert zu vergleichen, und bei Feststellen einer Abweichung den wenigstens einen Korrekturwert entsprechend anzupassen. Dadurch ist eine zielgenau Momentsteuerung des Elektromotos 6 bzw. der Bremswirkung möglich.

Weiters ist bevorzugt vorgesehen, dass zusätzlich eine vorgebbare Anzahl an Begrenzungen der möglichen Positionen vorgegeben bzw. gespeichert sind. Diese Begrenzungen sind Grenzwerte, welche jedoch jeweils von den jeweiligen Betriebszuständen abhängig sind.

Eine Eigenart der sog. Kraftsteuerung gegenüber der Positionssteuerung ist, dass diese zu einer deutlichen Hysterese neigt. Sofern die Steuer- und Kontrolleinheit 9 in einer Situation, in welcher sich die beweglichen Teile der Bremse in Ruhe befinden, etwa während der Bremsbelag 5 gegen die Reibfläche 3 gedrückt wird, lediglich ein derart geringfügig verändertes Motordrehmoment ermittelt bzw. ausgibt, dass dabei die Haftreibungen innerhalb der Betätigungsmechanik 7 nicht überschritten werden, dann kommt es trotz der veränderten Ansteuerung zu keiner Veränderung der Bremswirkung, da sich die Betätigungsmechanik 7 selbst nicht bewegt. Allerdings wird dieses Hystereseverhalten bei der gegenständlichen Bremsenanlage 1 durch das hin und her Bewegen des Belagsträgers 4 ermittelt und ist in dem wenigstens einen Korrekturwert berücksichtigt, sodass diese Hysterese bei der Kraftsteuerung mit berücksichtigt wird.

Ein besonderer Vorteil der Vorgabe eines Zielbremsmoments ist, dass das Drehmoment proportional der Normalkraft des Bremsbelages 5 auf die Reinfläche 3 ist. Bei der Steuerung über ein Zielbremsmoment hat die jeweils vorherrschende Steifigkeit der Bremse 2 bzw. deren Teile keine Auswirkungen. Vielmehr wird die Steuer- und Kontrolleinheit 9 bestrebt sein, dass Zielbremsmoment zu erreichen.

Selbstverständlich ist dabei vorgesehen, allfällige nicht lineare Übersetzungen der Betätigungsmechanik 7 bei der Steuerung bzw. Regelung mit zu berücksichtigen. Beispielsweise kann - bei entsprechender Übersetzung - auch ein nur geringfügig verändertes Drehmoment des Elektromotors 6 zu einer erheblichen Veränderung der Anpresskraft führen. Da die entsprechende Übertragungsfunktion der Betätigungsmechanik 7 jedoch der Steuer- und Kontrolleinheit 9 bekannt ist, wird dies bei der Steuerung bzw. Regelung berücksichtigt.

In einer besonders vorteilhaften Ausführung der gegenständlichen Bremsenanlage können auch beide Steuerungsarten kombiniert werden: Die Positionssteuerung reagiert auch auf kleine Positionsänderungen, die Kraftsteuerung wäre unabhängig von der Bremsensteifigkeit. Besonders bevorzugt ist daher weiters vorgesehen, dass die Steuer- und Kontrolleinheit 9 derart ausgebildet ist, dass diese bei vorgebbar geringen Änderungen der Bremswirkungsanforderung den Elektromotor 6 mittels Positionssteuerung ansteuert, um eine entsprechende Änderung der Bremswirkung zu erzielen, und dass die Steuer- und Kontrolleinheit 9 bei vorgebbar großen Änderungen der Bremswirkungsanforderung den Elektromotor 6 mittels Vorgabe eines Zielbremsmoments anzusteuern.

Es hat sich gezeigt, dass die Temperatur, welche eine Bremse 2, insbesondere die Bremsscheibe 3, im Zuge eines Bremsvorganges einnimmt, eine Funktion der tatsächlichen Bremsleistung der betreffenden Bremse 2 ist. Selbstverständlich kommt es dabei zu gewissen Verzögerungen bis der Effekt der Temperaturerhöhung als Folge der erzeugten Reibungswärme tatsächlich auftritt, welche Verzögerung als Phasenverschiebung bzw. als Latenzzeit betrachtet werden kann. Allerdings ist es untern den, bei einem Fahrzeug auftretenden realen Bedingungen, technisch höchst aufwendig eine ausreichend genaue Messung dieser Temperatur vorzunehmen, um auf deren Basis eine Regelung des Elektromotors 6 zum Erzielen bzw. Einstellen eines genaue Bremsmoments vorzunehmen. Zudem müsste eine solche Messanordnung auch noch ausreichend ausfallssicher bzw. redundant sein.

In Weiterbildung der gegenständlichen Bremsenanlage 1 ist vorgesehen, dass diese weiters wenigstens einen Bremsentemperatursensor 15 aufweist, welcher mit der Steuer- und Kontrolleinheit 9 verbunden ist, und welcher vorzugsweise an dem wenigstens einen Belagsträger 4 angeordnet ist. Weiters ist bevorzugt vorgesehen, dass die vorgebbare Mehrzahl Betriebsverhaltenserwartungswerte, insbesondere Wertemengen, vorzugsweise Funktionen, für die wenigstens eine Betriebsverhaltenserwartung, weiters die, durch einen Bremsvorgang mit einer geforderten Bremswirkung zu erwartende Erwärmung und thermische Expansion der Bremse 2 berücksichtigen. Dabei ist eine exakte Messung der Bremsscheibentemperatur nicht erforderlich, da die dabei - im Bereich der Reibfläche 3 bzw. des Bremsbelags 5 - ermittelte Temperatur lediglich dazu dient die entsprechenden Korrekturfaktoren anzupassen, und derart die Steuerung der Bremsenanlage 1 genauer zu gestallten. In diesem Sinn ist bevorzugt vorgesehen, dass die Steuer- und Kontrolleinheit 9 weiters dazu ausgebildet ist, aufgrund einer, während eines Bremsvorganges mit einem vorgegebenen Bremszielmoment, vom Bremsentemperatursensor 15 ermittelten Bremsentemperatur auf ein tatsächliches Bremsmoment zu schließen, und bei einer vorgebbaren Abweichung des Bremsmoments vom Bremszielmoment den wenigstens einen Korrekturfaktor anzupassen. Die von dem Bremsentemperatursensor 15 ermittelte Temperatur ist selbst keine Regelgröße, weshalb die gegenständliche Bremsenanlage 1 auch bei Verschmutzung bzw. Ausfall des Bremsentemperatursensors 15 weiterhin funktioniert.

Bei Einbau der Bremsenanlage 1 in ein Fahrzeug, kann die Genauigkeit der Bremswirkung weiters durch eine Vernetzung der Bremsenanlage 1 mit Sensoren des Fahrzeuges gesteigert werden. In Weiterbildung kann daher bevorzugt vorgesehen sein, dass das Fahrzeug wenigstens einen Sensor zur Ermittlung einer individuellen Raddrehzahl und/oder eines Radschlupfes, insbesondere als Teil eines ABS und/oder ESP des Fahrzeuges, aufweist, dass der Sensor wenigstens mittelbar mit der Steuer- und Kontrolleinheit 9 der Bremsenanlage 1 verbunden ist, dass die Steuer- und Kontrolleinheit 9 weiters dazu ausgebildet ist, während eines Bremsvorganges die von dem Sensor ermittelte Raddrehzahl bzw. den Radschlupf mit wenigstens einem Wert für eine entsprechende Betriebsverhaltenserwartung zu vergleichen, und bei einer vorgebbaren Abweichung den wenigstens einen Korrekturfaktor anzupassen.

Bevorzugt ist die Steuer- und Kontrolleinheit 9 dazu ausgebildet mittels sog. Sensor-Fusion die einzelnen ermittelten Messgrößen zu verbinden.

Es ist bekannt, aus dem Vorgang "Bremse betätigen" und "Bremse lösen" aufgrund des unterschiedlichen Motormoments den Wirkungsgrad berechnen kann. Gegenständlich wird allerdings davon ausgegangen, dass man bei Inbetriebnahme des Fahrzeuges diesen Vergleichsvorgang nicht ausführen kann, da ja z.B. ein Reset während des fahrens stattgefunden haben könnte und man niemals beim Fahren ungewollte Bremsungen einlegen dar. Auch sonst würde ein Bremsvorgang beim Einschalten u.U. vom Fahrer als seltsam und ungewohnt empfunden werden.

Gegenständlich wird, neben der bevorzugten Speicherung der von mehreren Parametern abhängigen Verluste, welche beispielsweise bei kalten Schmiermitteln höher sind, als wenn diese auf Betriebstemperatur sind, eine Messung der augenblicklichen Verluste zusammen mit einer Kalibrierung ohne Bremsung durchgeführt. Dabei wird in jenem Bereich, in dem sicher noch der Luftspalt des Bremsbelages 5 zur Reibfläche 3 vorliegt, eine kleine Bewegung des Belagsträgers 4 durchgeführt. Damit können die Verluste abgeschätzt werden. Durch Verwendung der wenigstens einen Feder, kann gleichzeitig mit der Ermittlung des verlustfreien Falles, durch Berücksichtigung bzw. messtechnischen Kompensation der Verluste, ermittelt werden, ob dieser verlustfreie Fall die bekannte Federkraft wiedergibt. Gegebenenfalls wird ein Korrekturwert gebildet.

Damit kann eine Kalibrierung, z.B. der Umrechnung von Strom zu Motormoment erreicht werden und es kann eine erste Abschätzung der Verluste erfolgen, wodurch nun die gespeicherten Verlustwerte mittels wenigstens eines Korrekturfaktors an die nun festgestellten tatsächlichen Bedingungen angenähert werden können, ohne Bremsungen auszulösen. Diese Annäherung kann sehr schnell erfolgen und ist bereits sehr genau.

Bevorzugt ist vorgesehen, dass die Feder als Rückstellfeder zum Abheben des Belagsträgers 4 von der Reibfläche 3 ausgebildet ist. Diese Feder kann auch als "Luftspaltfeder" bezeichnet werden.

Bevorzugt ist vorgesehen, dass diese Korrekturwerte über einen vorgebbaren Zeitraum gemittelt werden, und ein derart ermittelter Mittelwert gebildet und verwendet wird. Dadurch führt nicht eine einzige Störung zur falschen Abstimmung der Bremsen 2. Die einzelnen jeweils aktuell ermittelten Korrekturwerte werden daher bevorzugt nicht zur sofortigen Korrektur verwendet.

Wenn alternativ bzw. wie bekannt nur der Wirkungsgrad berechnet wird und dieser Wert zur Korrektur angewendet wird, kann sich bei einer toleranzbehafteten Messung die Bremse durch Anwendung diese Wertes unangenehm verändern. Daher könnte man diese Werte glätten oder Mitteln, was aber ab Inbetriebnahme zu einer längeren Zeit führt, bis aussagekräftige Mittelwerte gebildet sind. Um beide Effekte zu minimieren, ist bevorzugt vorgesehen, Standard bzw. Default-Verlustwerte über alle Einflussgrößen vorab zu speichern. Derartige gespeicherte Standard bzw. Default-Verlustwerte können beispielsweise auch Zusammenhänge über die Umgebungstemperatur, etwa wegen der temperaturabhängigen Viskosität von Schmierstoffen, enthalten. Bei Neuinbetriebnahme der Bremsenanlage 1 werden also bereits sinnvolle Korrekturwerte als Startwerte gebildet. Verbesserungen der Korrektur im laufenden Betrieb können wiederum dauerhaft in der Speichereinheit 13 gespeichert werden, sodass bei folgenden Einschaltvorgängen auch die Verbesserungen vorliegen.

Mit dieser nun, aufgrund der Kalibrierung auch im kleinen Kraftbereich hohen Messgenauigkeit kann zusätzlich der Berührpunkt des Bremsbelages 5 an die Reibfläche gemessen werden, weil ab diesem Berührpunkt die kleine Kraft, die sonst im Luftspalt zwischen der Ruheposition des Bremsbelags 5 und der Reibfläche 3 nur von der Feder verursacht wird, anzusteigen beginnt.

Die bevorzugte Nichtlinearität der Betätigungsmechanik 7 kann hier sehr vorteilhaft zur Messung kleiner Anpresskräfte genutzt werden, da die Nichtlinearität im Bereich des Luftspaltes eine höhere Bewegungsgeschwindigkeit des Belagsträger 4 bewirkt und somit im Vergleich zu linearen Antrieben bereits ein höheres und leichter messbares Aktuatormoment bewirkt.

Weiters hat sich gezeigt, dass während der Durchführung eines Bremsvorganges erfolgende physikalische Veränderungen an der Reibfläche 3 bzw. des Bremsbelags 5 vorteilhaft genutzt werden können. Wenn die vorgegebene Bremswirkung eingestellt wurde, findet durch die zunehmende Wärmedehnung der Reibfläche 3 eine Erhöhung der Anpressung statt, so dass die Bremse 2, um dies zu vermeiden, die Betätigung etwas zurücknehmen muss. Diese Zurücknahme kann hier genutzt werden, ohne eine kleine Betätigung zusätzlich anzulegen. Dadurch kann auf eine Modulation des Bremssteuersignals verzichtet werden.

Die zusätzlich angelegte kleine Veränderung des Bremssteuersignals kann hier vorteilhaft auch unterbleiben, denn bei dieser Steuerung kann die Genauigkeitsmessung der Position so hoch sein (im Bereich unter einem Winkelgrad bis unter 1/3 Umdrehung am Motor), dass es genügt, eine Änderung des Aktuator- bzw. Motormoments durchzuführen, bis die erste minimalste Änderung der Aktuator- bzw. Motorposition eintritt, wobei noch keine erkennbare Veränderung der Belagsposition erfolgt und damit auch noch keine Änderung der Anpressung und des Bremsmoments. Das kann man als "keine Änderung" einstufen bzw. bezeichnen, da es sich hier um eine Positionsregelung handeln kann, welche erst reagieren kann, wenn sie die kleinste erkennbare Positionsänderung feststellt. Erst dann kann eine Korrektur erfolgen. Eine solche Momentänderung braucht keine größere Veränderung als aufgrund der real vorhandenen bzw. bekannten Messgenauigkeit auch die bestmöglichste Positionshaltegenauigkeit ist. Bei Verwendung eines PID Reglers käme noch hinzu, dass ein solcher bei fast genau erreichter Position kaum mehr einen Proportionalanteil zur weiteren Verbesserung ausgibt.

Bei nichlinear betätigten Bremsen, daher bei Betätigung über ein veränderliches Übersetzungsverhältnis, ist nicht nur der Verlauf des Übersetzungsverhältnisses mit Werten an den Betätigungspositionen zu berücksichtigen, sondern auch, dass sich der Beginn der Anpressung und damit der Betrieb der Bremse auf der nichtlinearen Kennlinie verschiebt, weil sich beispielsweise der Luftspalt verändert, etwa durch die Einstellgenauigkeit der mechanischen Nachstellvorrichtung 8.

Weiters können auch interne Vorgänge der Bremse 2 nun wie die Belagsberührung gemessen werden. Wenn z.B. die interne Übersetzung der Betätigungsmechanik 7 einen Beginn hat, kann ein Endanschlag gefunden bzw. der Beginn der Federwirkung erkannt werden. Wenn beispielsweise bei einer nichtlinearen Übersetzung der Betätigungsmechanik 7 diese erst ab einer gewissen Motorstellung zu wirken beginnt, etwa aufgrund des Beginns einer Erhebungskurve, kann dieser Anfang festgestellt werden. Dies kann auch als Absicherung genutzt werden ob der Endanschlag und der Erhebungsbeginn im erwarteten Abstand eintreten.

Bevorzugt kann die gegenständliche Bremsanlage auch über eine Feder betätigt werden und vom Aktuator gelöst werden. Dabei ist bevorzugt vorgesehen, dass die Feder als Betätigungsfeder zum Aufbringen der für einen Bremsvorgang erforderlichen Kraft auf den Belagsträger 4 ausgebildet ist. Eisenbahnbremsen, die ohne Luftdruck über eine Feder in die Vollbremsung gehen, folgen diesem Prinzip.

Diese Betätigungsfeder kann, wie bekannt, direkt den Belag andrücken, sie kann aber auch über eine nichtlineare Betätigungsmechanik 7 wirken und somit genau die betätigungsabhängig nötige Anpresskraft bewirken und immer etwas mehr als nötig anpressen, wie eine sog. "auto-engage" Bremse, die sich schließt, oder immer etwas weniger, wie eine sog. "auto-release" Bremse, die aufgeht bzw. sich löst. Bei einer anpresskraftsensorlosen Bremsensteuerung (oder Regelung) ist es erforderlich eine vorzeichenrichtige Summe aus positionsabhängigen Kräften zu bilden, nämlich der Betätigungsfederkraft der Betätigungsfeder, der zur Anpressung des Bremsbelags nötigen Kraft und der Kraft aus dem Motor. Bevorzugt wird das an einheitlicher Stelle in der Bremsbetätigung gebildet, etwa am Aktuatormotor, und damit können auch gleichwertig Winkel und Momente des Motors ermittelt werden. Wenn in diesem Fall der Aktuatormotor anpresst, kann man von Aktuatormoment und betätigungsabhängigem Übersetzungsverhältnis auf die Anpresskraft schließen.

Bei einer zusätzlichen Betätigungsfeder muss ermittelt werden, wie viel die Betätigungsfeder zur Anpressung beiträgt und wie viel der Aktuator- bzw. Elektromotor 6, wobei bei der Wirkung des Elektromotor 6 die entsprechenden Vorzeichen richtig berücksichtigt werden müssen, da dieser sowohl Betätigen als auch Lösen könnte. Wenn nun eine zusätzliche Luftspalt- bzw. Rückstellfeder vorhanden ist, kann zur Genauigkeitssteigerung im Falle mit Betätigungsfeder ermittelt werden, ob die Berechnung das erwartete Verhalten der Luftspaltfeder wiedergibt und andernfalls eine Korrektur ermitteln und anwenden. Im Luftspalt ist die Situation einfacher, weil noch keine Anpresskraft vorliegt, die ab Anpressbeginn noch hinzukommt.

Mit diesem Verfahren der Einbeziehung der Luftspaltfeder kann eine Bremsenanlage 1 mit Betätigungsfeder genauer gesteuert bzw. geregelt werden. Natürlich ist der Verlauf bzw. eine Kennlinie der Betätigungsfeder in der Speichereinheit 13 hinterlegt. Besonders vorteilhaft ist diese Kalibriermöglichkeit, wenn die Genauigkeit der Luftspalteinstellung toleranzbehaftet sein kann. Durch die Kalibriermöglichkeit weiß man, ab wann zur Betätigungsfederkraft die Kraft aus der Anpressung dazukommt und die Bremssteuerung bzw. Regelung über das Motormoment ist nicht an eine entsprechende Unsicherheit gebunden.

Die Betätigungsfeder und Luftspaltfeder können auch derart ausgebildet bzw. angeordnet sein, dass diese unterschiedliche Winkel der Stellung des Elektromotors 6 abdecken, z.B. kann die Betätigungsfeder schon am Aktuatormotor 6 messbar sein, wenn die Luftspaltfeder noch nicht wirkt. Das kann vorteilhaft genutzt werden, um die Genauigkeit zu verbessern in dem Erkenntnisse aus den einzelnen Federn gewonnen werden. Dazu können auch Anteile berücksichtigt werden, etwa wie sich das Aktuatormotormoment einstellt oder ändert, wenn beispielsweise zur Betätigungsfeder die Luftspaltfeder vorzeichenrichtig dazukommt. Die Lage des Beginns der Anpressung kann ebenfalls aus der, ab dann einsetzenden, vorzeichenrichtigen Berechnung der Größe oder Änderung des Aktuatormotormoments ermittelt werden.

Besonders Vorteilhaft sind Daten zu Federwirkungen, Aktuatormotormoment, Verlusten, Steifigkeiten so in der Speichereinheit 13 abgelegt, dass Einflussfaktoren wie Temperatur, Alterung usw. berücksichtigt werden.

Zu obigen Ermittlungen ist festzustellen, dass die Luftspaltfeder auch nur aus mechanischen Gründen nötig sein kann, um die Teile in Position zu halten bzw. auch dazu nicht unbedingt erforderlich sein muss. Daraus ergibt sich, dass obiger Anteil der Luftspaltfeder auch klein bis unmessbar sein kann und sich damit obiges auf die Betätigungsfeder reduziert.

Natürlich könnten auch noch mehrere Federn an beliebigen Bauteilen wirken und mehrere Aktuatormotoren vorhanden sein, etwa aus Sicherheitsgründen, und zusätzliche Energien wirken wie beispielsweise aus Gasdruckfedern oder Selbstverstärkungseffekten. Obige vorzeichenrichtige und vorteilhaft auf eine Stelle umgerechnete Zusammenfassung der Kräfte und Momente bleibt aber das Grundprinzip.

Sofern die Bremsenanlage einen Kraftsensor, ein Kraftmesssystems bzw. einen Normalkraftsensor aufweist, kann ein solcher Kraftsensor, ein solches Kraftmesssystems bzw. ein solcher Normalkraftsensor mit dem gegenständlichen Verfahren ebenfalls kalibriert werden. dadurch kann die Messgenauigkeit eines derartigen Systems erhöht werden.

## Patentansprüche

1. Elektromechanische Bremsenanlage (1) umfassend wenigstens eine elektromechanische Bremse (2), wobei die elektromechanische Bremse (2)
- wenigstens eine Reibfläche (3),
- wenigstens einen Belagsträger (4) mit wenigstens einem Bremsbelag (5),
- wenigstens einen Elektromotor (6) zum vorgebbaren Bewegen des Belagsträgers (4),
- eine Betätigungsmechanik (7), an welcher der Belagsträger (4) gelagert ist, und welche mit dem Elektromotor (6) verbunden ist,
- wenigstens eine Feder mit einer Federsteifigkeit, welche wenigstens mittelbar auf den Belagsträger (4) wirkt, und
- vorzugsweise wenigstens eine Nachstellvorrichtung (8),
aufweist, wobei die Bremsenanlage (1) eine Steuer- und Kontrolleinheit (9) aufweist, welche dazu ausgebildet ist eingangsseitig eine Bremswirkungsanforderung zu empfangen, und auf Basis der Bremswirkungsanforderung ein Bremssteuersignal zu generieren und an einen Regler (10) des Elektromotors (6) auszugeben, **dadurch gekennzeichnet, dass** die Steuer- und Kontrolleinheit (9) dazu ausgebildet ist:
- aus wenigstens einem, während einer ersten Bewegung des Belagsträgers (4) mittels des Elektromotors (6) ermittelten ersten Wert wenigstens eines ersten Betriebsparameters wenigstens eines Teils der Bremse (2), wenigstens einen Betriebsverhaltenswert, insbesondere eine Betriebsverhaltenswertemenge, vorzugsweise eine Betriebsverhaltensfunktion, für ein reales Betriebsverhalten der betreffenden Bremse (2) zu ermitteln, und durch einen Vergleich des wenigstens einen realen Betriebsverhaltenswerts mit wenigstens einer gespeicherten Betriebsverhaltenserwartung wenigstens einen Korrekturfaktor, insbesondere wenigstens eine Korrekturfaktorenmenge, vorzugsweise wenigstens eine Korrekturkurve, zu ermitteln, und weiters
- das Bremssteuersignal um den wenigstens einen Korrekturfaktor, insbesondere die Korrekturfaktorenmenge, vorzugsweise die Korrekturkurve, zu korrigieren, und den Regler mit dem korrigierten Bremssteuersignal anzusteuern
- wobei die Steuer- und Kontrolleinheit (9) weiters dazu ausgebildet ist, eine Kalibrierung mittels einer Federkraft der wenigstens einen Feder während der ersten Bewegung vorzunehmen.

2. Elektromechanische Bremsenanlage (1) nach Anspruch 1, **dadurch gekennzeichnet, dass** bei der Bildung des Betriebsverhaltenswerts weiters wenigstens ein, während einer, der ersten Bewegung entgegen gesetzten zweiten Bewegung des Belagsträgers (4) mittels des Elektromotors (6) ermittelter zweiter Wert des ersten Betriebsparameters des Teils der Bremse (2) berücksichtigt wird.

3. Elektromechanische Bremsenanlage (1) nach Anspruch 1 oder 2, **dadurch gekennzeichnet, dass** die Feder als Betätigungsfeder zum Aufbringen der für einen Bremsvorgang erforderlichen Kraft auf den Belagsträger (4) ausgebildet ist.

4. Elektromechanische Bremsenanlage (1) nach einem der Ansprüche 1 bis 3, **dadurch gekennzeichnet, dass** die Steuer- und Kontrolleinheit (9) weiters dazu ausgebildet ist, in wenigstens einem bremswirkungsanforderungsfreien Zeitraum den Elektromotor (6) derart anzusteuern, dass die erste Bewegung und die zweite Bewegung des Belagsträgers (4) lediglich innerhalb eines Spalts (11) zwischen Reibfläche (3) und Bremsbelag (5) erfolgen.

5. Elektromechanische Bremsenanlage (1) nach einem der Ansprüche 1 bis 4, **dadurch gekennzeichnet, dass** der ermittelte wenigstens eine Korrekturfaktor weiters auch die Federsteifigkeit der Feder mit berücksichtigt.

6. Elektromechanische Bremsenanlage (1) nach einem der Ansprüche 1 bis 5, **dadurch gekennzeichnet, dass** die Bremsenanlage (1) eine, der Steuer- und Kontrolleinheit (9) zugeordnete Speichereinheit (13) aufweist, in welcher eine vorgebbare Mehrzahl Betriebsverhaltenserwartungswerte, insbesondere Wertemengen, vorzugsweise Funktionen, für die wenigstens eine Betriebsverhaltenserwartung abgelegt sind.

7. Elektromechanische Bremsenanlage (1) nach einem der Ansprüche 1 bis 6, **dadurch gekennzeichnet, dass** die Steuer- und Kontrolleinheit (9) dazu ausgebildet ist, bei Eingang einer Bremswirkungsanforderung mit der Betriebsverhaltenserwartung sowie dem wenigstens einen Korrekturwert ein Bremssteuersignal zu erzeugen und an den Regler (10) auszugeben.

8. Elektromechanische Bremsenanlage (1) nach einem der Ansprüche 1 bis 7, **dadurch gekennzeichnet, dass** die Bremsenanlage (1) weiters wenigstens einen Bremsentemperatursensor (15) aufweist, welcher mit der Steuer- und Kontrolleinheit (9) verbunden ist, und welcher vorzugsweise an dem wenigstens einen Belagsträger (4) angeordnet ist.

9. Elektromechanische Bremsenanlage (1) nach Anspruch 8, **dadurch gekennzeichnet, dass** die Steuer- und Kontrolleinheit (9) weiters dazu ausgebildet ist, aufgrund einer, während eines Bremsvorganges mit einem vorgegebenen Bremszielmoment, vom Bremsentemperatursensor (15) ermittelten Bremsentemperatur auf ein tatsächliches Bremsmoment zu schließen, und bei einer vorgebbaren Abweichung des Bremsmoments vom Bremszielmoment den wenigstens einen Korrekturfaktor anzupassen.

10. Elektromechanische Bremsenanlage (1) nach einem der Ansprüche 1 bis 9, **dadurch gekennzeichnet, dass** die Betätigungsmechanik (7) einen mechanischen Eingang aufweist, welcher mit dem Elektromotor (6) verbunden ist, dass die Betätigungsmechanik (7) einen mechanischen Ausgang aufweist, welcher mit dem Belagsträger (4) verbunden ist, und dass die Betätigungsmechanik (7) derart ausgebildet ist, dass eine Bewegung am Eingang über einen vorgebbar nicht linearen Zusammenhang mit einer Bewegung des Ausgangs zusammenhängt.

11. Elektromechanische Bremsenanlage (1) nach einem der Ansprüche 6 bis 10, **dadurch gekennzeichnet, dass** eine Übertragungsfunktion der Betätigungsmechanik (7) in der Speichereinheit (13) abgelegt ist.

12. Elektromechanische Bremsenanlage (1) nach einem der Ansprüche 1 bis 11, **dadurch gekennzeichnet, dass** die Bremsenanlage (1) kraftsensorfrei ausgebildet ist.

13. Fahrzeug mit wenigstens einer elektromechanischen Bremsenanlage (1) nach einem der Ansprüche 1 bis 12.

14. Fahrzeug nach Anspruch 13, **dadurch gekennzeichnet, dass** das Fahrzeug wenigstens einen Sensor zur Ermittlung einer individuellen Raddrehzahl und/oder eines Radschlupfes, insbesondere als Teil eines ABS und/oder ESP des Fahrzeuges, aufweist, dass der Sensor wenigstens mittelbar mit der Steuer- und Kontrolleinheit (9) der Bremsenanlage (1) verbunden ist, dass die Steuer- und Kontrolleinheit (9) weiters dazu ausgebildet ist, während eines Bremsvorganges die von dem Sensor ermittelte Raddrehzahl bzw. den Radschlupf mit wenigstens einem Wert für eine entsprechende Betriebsverhaltenserwartung zu vergleichen, und bei einer vorgebbaren Abweichung den wenigstens einen Korrekturfaktor anzupassen.

15. Verfahren zum Betreiben einer elektromechanischen Bremsenanlage (1) umfassend wenigstens eine elektromechanische Bremse (2), wobei die elektromechanische Bremse (2)
- wenigstens eine Reibfläche (3),
- wenigstens einen Belagsträger (4) mit wenigstens einem Bremsbelag (5),
- wenigstens einen Elektromotor (6) zum vorgebbaren Bewegen des Belagsträgers (4),
- eine Betätigungsmechanik (7), an welcher der Belagsträger (4) gelagert ist, und welche mit dem Elektromotor (6) verbunden ist,
- wenigstens eine Feder mit einer Federsteifigkeit, welche wenigstens mittelbar auf den Belagsträger (4) wirkt, und
- vorzugsweise wenigstens eine Nachstellvorrichtung (8),
aufweist, wobei die Bremsenanlage (1) eine Steuer- und Kontrolleinheit (9) aufweist, wobei eine Bremswirkungsanforderung von der Steuer- und Kontrolleinheit (9) empfangen wird, wobei auf Basis der Bremswirkungsanforderung ein Bremssteuersignal von der Steuer- und Kontrolleinheit (9) generiert wird, wobei das Bremssteuersignal an einen Regler (10) des Elektromotors (6) ausgegeben wird, **dadurch gekennzeichnet,**
- **dass** bei einer ersten Bewegung des Belagsträgers (4) mittels des Elektromotors (6) wenigstens ein Wert wenigstens eines ersten Betriebsparameters wenigstens eines Teils der Bremse (2) ermittelt und an die Steuer- und Kontrolleinheit (9) übermittelt wird,
- **dass** von der Steuer- und Kontrolleinheit (9) aus dem ersten Wert wenigstens ein Korrekturfaktor, insbesondere wenigstens eine Korrekturfaktorenmenge, vorzugsweise wenigstens eine Korrekturkurve, ermittelt wird,
- und **dass** das Bremssteuersignal von der Steuer- und Kontrolleinheit (9) um den wenigstens einen Korrekturfaktor, insbesondere die Korrekturfaktorenmenge, vorzugsweise die Korrekturkurve, korrigiert wird
- wobei die Steuer- und Kontrolleinheit (9) weiters eine Kalibrierung mittels einer Federkraft der wenigstens einen Feder während der ersten Bewegung durchführt.

## Claims

1. An electromechanical brake system (1) comprising at least one electromechanical brake (2), wherein the electromechanical brake (2) has
- at least one friction surface (3),
- at least one lining support (4) having at least one brake lining (5),
- at least one electric motor (6) for the predefinable moving of the lining support (4),
- an actuating mechanism (7), on which the lining support (4) is mounted, and which is connected to the electric motor (6),
- at least one spring having a spring stiffness which acts at least indirectly on the lining support (4), and
- preferably at least one readjustment device (8),
wherein the brake system (1) has a control and monitoring unit (9), which is designed to receive a braking action request on the input side and to generate a brake control signal on the basis of the braking action request and output it to a regulator (10) of the electric motor (6), **characterized in that** the control and monitoring unit (9) is designed:
- to ascertain, from at least one first value, which is ascertained during a first movement of the lining support (4) by means of the electric motor (6), of at least one first operating parameter of at least one part of the brake (2), at least one operating behavior value, in particular an operating behavior value set, preferably an operating behavior function, for a real operating behavior of the relevant brake (2), and to ascertain, by a comparison of the at least one real operating behavior value to at least one stored operating behavior expectation, at least one correction factor, in particular at least one correction factor set, preferably at least one correction curve, and furthermore
- to correct the brake control system by the at least one correction factor, in particular the correction factor set, preferably the correction curve, and to activate the regulator using the corrected brake control signal,
- wherein the control and monitoring unit (9) is furthermore designed to perform a calibration by means of a spring force of the at least one spring during the first movement.

2. The electromechanical brake system (1) as claimed in claim 1,
**characterized in that,** in the formation of the operating behavior value, furthermore at least one second value of the first operating parameter of the part of the brake (2) ascertained by means of the electric motor (6) during a second movement of the lining support (4) opposite to the first movement is taken into consideration.

3. The electromechanical brake system (1) as claimed in one or two,
**characterized in that** the spring is designed as an actuating spring for applying the force required for a braking procedure to the lining support (4).

4. The electromechanical brake system (1) as claimed in any one of claims 1 to 3, **characterized in that** the control and monitoring unit (9) is furthermore designed to activate the electric motor (6) in at least one time period free of a braking action request in such a way that the first movement and the second movement of the lining support (4) only take place within a gap (11) between friction surface (3) and brake lining (5).

5. The electromechanical brake system (1) as claimed in any one of claims 1 to 4, **characterized in that** the ascertained at least one correction factor furthermore also takes into consideration the spring stiffness of the spring.

6. The electromechanical brake system (1) as claimed in any one of claims 1 to 5, **characterized in that** the brake system (1) has a storage unit (13) associated with the control and monitoring unit (9), in which a predefinable plurality of operating behavior expected values, in particular value sets, preferably functions for the at least one operating behavior expectation are stored.

7. The electromechanical brake system (1) as claimed in any one of claims 1 to 6, **characterized in that** the control and monitoring unit (9) is designed to generate a brake control signal upon input of a braking action request using the operating behavior expectation and the at least one correction value and output it to the regulator (10).

8. The electromechanical brake system (1) as claimed in any one of claims 1 to 7, **characterized in that** the brake system (1) furthermore includes at least one brake temperature sensor (15), which is connected to the control and monitoring unit (9), and which is preferably arranged on the at least one lining support (4).

9. The electromechanical brake system (1) as claimed in claim 8, **characterized in that** the control and monitoring unit (9) is furthermore designed to conclude, on the basis of a brake temperature ascertained by the brake temperature sensor (15) during a braking procedure having a predefined braking target torque, an actual braking torque and to adapt the at least one correction factor in the event of a predefinable deviation of the braking torque from the braking target torque.

10. The electromechanical brake system (1) as claimed in any one of claims 1 to 9, **characterized in that** the actuating mechanism (7) includes a mechanical input, which is connected to the electric motor (6), **in that** the actuating mechanism (7) includes a mechanical output, which is connected to the lining support (4), and **in that** the actuating mechanism (7) is designed in such a way that a movement at the input is related via a predefinable nonlinear relationship to a movement of the output.

11. The electromechanical brake system (1) as claimed in any one of claims 6 to 10, **characterized in that** a transmission function of the actuating mechanism (7) is stored in the storage unit (13).

12. The electromechanical brake system (1) as claimed in any one of claims 1 to 11, **characterized in that** the brake system (1) is formed free of force sensors.

13. A vehicle having at least one electromechanical brake system (1) as claimed in any one of claims 1 to 12.

14. The vehicle as claimed in claim 13, **characterized in that** the vehicle includes at least one sensor for ascertaining an individual wheel speed and/or a wheel slip, in particular as part of an ABS and/or ESP of the vehicle, **in that** the sensor is connected at least indirectly to the control and monitoring unit (9) of the brake system (1), **in that** the control and monitoring unit (9) is furthermore designed, during a braking procedure, to compare the wheel speed ascertained by the sensor or the wheel slip to at least one value for a corresponding operating behavior expectation, and to adapt the at least one correction factor in the event of a predefinable deviation.

15. A method for operating an electromechanical brake system (1) comprising at least one electromechanical brake (2), wherein the electromechanical brake (2) has
- at least one friction surface (3),
- at least one lining support (4) having at least one brake lining (5),
- at least one electric motor (6) for the predefinable moving of the lining support (4),
- an actuating mechanism (7), on which the lining support (4) is mounted, and which is connected to the electric motor (6),
- at least one spring having a spring stiffness which acts at least indirectly on the lining support (4), and
- preferably at least one readjustment device (8),
wherein the brake system (1) has a control and monitoring unit (9), wherein a braking action request is received by the control and monitoring unit (9), wherein a brake control signal is generated by the control and monitoring unit (9) on the basis of the braking action request, wherein the brake control signal is output to a regulator (10) of the electric motor (6), **characterized**
- **in that** at least one value of at least one first operating parameter of at least one part of the brake (2) during a first movement of the lining support (4) by means of the electric motor (6) is ascertained and transmitted to the control and monitoring unit (9),
- **in that** at least one correction factor, in particular at least one correction factor set, preferably at least one correction curve is ascertained from the first value by the control and monitoring unit (9),
- and **in that** the brake control signal is corrected by the control and monitoring unit (9) by the at least one correction factor, in particular the correction factor set, preferably the correction curve, and
- wherein the control and monitoring unit (9) furthermore carries out a calibration by means of a spring force of the at least one spring during the first movement.

## Revendications

1. Système de freinage électromécanique (1) comprenant au moins un frein électromécanique (2), dans lequel le frein électromécanique (2) possède
- au moins une surface de frottement (3),
- au moins un support de garniture (4) comportant au moins une garniture de frein (5),
- au moins un moteur électrique (6) pour le déplacement prédéfini du support de garniture (4),
- un mécanisme d'actionnement (7), sur lequel le support de garniture (4) est monté, et qui est relié au moteur électrique (6),
- au moins un ressort ayant une raideur de ressort qui agit au moins indirectement sur le support de garniture (4), et
- de préférence, au moins un dispositif de réajustement (8),
dans lequel le système de freinage (1) comporte une unité de commande et de contrôle (9) conçue pour recevoir une demande d'action de freinage du côté de l'entrée et pour générer un signal de commande de freinage sur la base de la demande d'action de freinage et l'envoyer à un régulateur (10) du moteur électrique (6), **caractérisé en ce que** l'unité de commande et de contrôle (9) est conçue :
- à déterminer, à partir d'au moins une première valeur, qui est déterminée lors d'un premier mouvement du support de garniture (4) au moyen du moteur électrique (6), d'au moins un premier paramètre de fonctionnement d'au moins une partie du frein (2), au moins une valeur de comportement de fonctionnement, en particulier un ensemble de valeurs de comportement de fonctionnement, de préférence une fonction de comportement de fonctionnement, pour un comportement de fonctionnement réel du frein (2) concerné, et pour déterminer, par une comparaison de l'au moins une valeur de comportement de fonctionnement réel avec au moins une attente de comportement de fonctionnement stockée, au moins un facteur de correction, en particulier au moins un ensemble de facteurs de correction, de préférence au moins une courbe de correction, et en outre
- corriger le système de commande de freinage par le biais d'au moins un facteur de correction, en particulier le jeu de facteurs de correction, de préférence la courbe de correction, et activer le régulateur à l'aide du signal de commande de freinage corrigé,
- l'unité de commande et de contrôle (9) est en outre conçue pour effectuer un étalonnage au moyen d'une force de ressort de l'au moins un ressort pendant le premier mouvement.

2. Système de freinage électromécanique (1) selon la revendication 1, **caractérisé en ce que**, lors de la formation de la valeur de comportement de fonctionnement, au moins une deuxième valeur du premier paramètre de fonctionnement de la partie du frein (2) déterminée au moyen du moteur électrique (6) lors d'un deuxième mouvement du support de garniture (4) opposé au premier mouvement est prise en considération.

3. Système de freinage électromécanique (1) selon la première ou la deuxième revendication, **caractérisé en ce que** le ressort est conçu comme un ressort d'actionnement pour appliquer au support de garniture (4) la force nécessaire à une procédure de freinage.

4. Système de freinage électromécanique (1) selon l'une quelconque des revendications 1 à 3, **caractérisé en ce que** l'unité de commande et de contrôle (9) est en outre conçue pour activer le moteur électrique (6) dans au moins une période de temps sans demande d'action de freinage de telle sorte que le premier mouvement et le second mouvement du support de garniture (4) n'ont lieu qu'à l'intérieur d'un espace (11) entre la surface de frottement (3) et la garniture de frein (5).

5. Système de freinage électromécanique (1) selon l'une quelconque des revendications 1 à 4, **caractérisé en ce que** le au moins un facteur de correction déterminé prend également en considération la rigidité du ressort.

6. Système de freinage électromécanique (1) selon l'une des revendications 1 à 5, **caractérisé en ce que** le système de freinage (1) possède une unité de stockage (13) associée à l'unité de commande et de surveillance (9), dans laquelle sont stockées une pluralité prédéfinissable de valeurs attendues de comportement de fonctionnement, en particulier des ensembles de valeurs, de préférence des fonctions pour l'au moins une attente de comportement de fonctionnement.

7. Système de freinage électromécanique (1) selon l'une quelconque des revendications 1 à 6, **caractérisé en ce que** l'unité de commande et de surveillance (9) est conçue pour générer un signal de commande de freinage à l'entrée d'une demande d'action de freinage en utilisant l'attente de comportement de fonctionnement et au moins une valeur de correction et en l'envoyant au régulateur (10).

8. Système de freinage électromécanique (1) selon l'une quelconque des revendications 1 à 7, **caractérisé en ce que** le système de freinage (1) comprend en outre au moins un capteur de température de freinage (15), qui est connecté à l'unité de commande et de surveillance (9), et qui est de préférence disposé sur le au moins un support de garniture (4).

9. Système de freinage électromécanique (1) selon la revendication 8, **caractérisé en ce que** l'unité de commande et de contrôle (9) est en outre conçue pour conclure, sur la base d'une température de frein déterminée par le capteur de température de frein (15) au cours d'une procédure de freinage ayant un couple cible de freinage prédéfini, un couple de freinage réel et pour adapter au moins un facteur de correction en cas d'écart prédéfini du couple de freinage par rapport au couple cible de freinage.

10. Système de freinage électromécanique (1) selon l'une quelconque des revendications 1 à 9, **caractérisé en ce que** le mécanisme d'actionnement (7) comprend une entrée mécanique, qui est reliée au moteur électrique (6), **en ce que** le mécanisme d'actionnement (7) comprend une sortie mécanique, qui est reliée au support de garniture (4), et **en ce que** le mécanisme d'actionnement (7) est conçu de telle sorte qu'un mouvement à l'entrée est lié par une relation non linéaire prédéfinissable à un mouvement de la sortie.

11. Système de freinage électromécanique (1) selon l'une quelconque des revendications 6 à 10, **caractérisé en ce qu'**une fonction de transmission du mécanisme d'actionnement (7) est stockée dans l'unité de stockage (13).

12. Système de freinage électromécanique (1) selon l'une des revendications 1 à 11, **caractérisé par le fait que** le système de freinage (1) est exempt de capteurs de force.

13. Véhicule comportant au moins un système de freinage électromécanique (1) selon l'une quelconque des revendications 1 à 12.

14. Véhicule selon la revendication 13, **caractérisé en ce que** le véhicule comprend au moins un capteur pour déterminer la vitesse d'une roue individuelle et/ou le patinage d'une roue, en particulier dans le cadre d'un ABS et/ou d'un ESP du véhicule, **en ce que** le capteur est connecté au moins indirectement à l'unité de commande et de contrôle (9) du système de freinage (1), l'unité de commande et de surveillance (9) est en outre conçue pour comparer, au cours d'une procédure de freinage, la vitesse de rotation de la roue déterminée par le capteur ou le patinage de la roue à au moins une valeur correspondant à une attente de comportement de fonctionnement, et pour adapter au moins un facteur de correction en cas d'écart prédéfini.

15. Procédé de fonctionnement d'un système de freinage électromécanique (1) comprenant au moins un frein électromécanique (2), dans lequel le frein électromécanique (2) comporte
- au moins une surface de frottement (3),
- au moins un support de garniture (4) comportant au moins une garniture de frein (5),
- au moins un moteur électrique (6) pour le déplacement prédéfini du support de garniture (4),
- un mécanisme d'actionnement (7), sur lequel le support de garniture (4) est monté, et qui est relié au moteur électrique (6),
- au moins un ressort ayant une raideur de ressort qui agit au moins indirectement sur le support de garniture (4), et
- de préférence, au moins un dispositif de réajustement (8),
dans lequel le système de freinage (1) comporte une unité de commande et de surveillance (9), dans lequel une demande d'action de freinage est reçue par l'unité de commande et de surveillance (9), dans lequel un signal de commande de freinage est généré par l'unité de commande et de surveillance (9) sur la base de la demande d'action de freinage, dans lequel le signal de commande de freinage est émis vers un régulateur (10) du moteur électrique (6), **caractérisé en ce que**
- **en ce qu'**au moins une valeur d'au moins un premier paramètre de fonctionnement d'au moins une partie du frein (2) pendant un premier mouvement du support de garniture (4) au moyen du moteur électrique (6) est déterminée et transmise à l'unité de commande et de surveillance (9),
- au moins un facteur de correction, en particulier au moins un ensemble de facteurs de correction, de préférence au moins une courbe de correction, est déterminé à partir de la première valeur par l'unité de commande et de contrôle (9),
- et que le signal de commande de frein est corrigé par l'unité de commande et de surveillance (9) par au moins un facteur de correction, en particulier le jeu de facteurs de correction, de préférence la courbe de correction, et
- dans lequel l'unité de commande et de contrôle (9) effectue en outre un étalonnage au moyen d'une force de ressort de l'au moins un ressort pendant le premier mouvement.
